Europäisches Patentamt

(19) European Patent Office

Office européen des brevets

(11) Veröffentlichungsnummer: **0 119 187**
**B1**

# (12) EUROPÄISCHE PATENTSCHRIFT

(45) Veröffentlichungstag der Patentschrift:
**07.12.88**

(21) Anmeldenummer: **84890052.8**

(22) Anmeldetag: **16.03.84**

(51) Int. Cl.⁴: **H 02 H 3/00,** H 02 G 3/00,
H 02 J 13/00

(54) **Anordnung zur Stromversorgung.**

(30) Priorität: **17.03.83 AT 946/83**
**01.09.83 AT 3140/83**

(43) Veröffentlichungstag der Anmeldung:
**19.09.84 Patentblatt 84/38**

(45) Bekanntmachung des Hinweises auf die Patenterteilung:
**07.12.88 Patentblatt 88/49**

(84) Benannte Vertragsstaaten:
**AT BE CH DE FR GB IT LI LU NL SE**

(56) Entgegenhaltungen:
**EP-A- 0 040 146**
**DE-A- 2 311 751**
**DE-A- 2 340 266**
**DE-A- 2 800 472**
**DE-A- 3 004 950**
**FR-A- 2 338 600**
**US-A- 3 083 307**
**US-A- 3 558 902**
**US-A- 4 215 276**

(73) Patentinhaber: **Hawlan, Hans, Marchfeldstrasse 16-18,**
**A-1200 Wien (AT)**

(72) Erfinder: **Hawlan, Hans, Marchfeldstrasse 16-18,**
**A-1200 Wien (AT)**
Erfinder: **Wildhack, Helmut, Dr., Robert Stolzgasse 6,**
**A-2344 Maria Enzersdorf (AT)**

## Beschreibung

Die Erfindung betrifft eine Anordnung zur Stromversorgung von Gebäuden, Wohnhäusern, Büros, Wohnungen, Geschäftslokalen, od.dgl., wobei die Stromversorgungsleitungen von einem Überstrom- und Fehlerstromschutzschalter zur Absicherung aufweisenden Anschlussstelle bzw. Zentrale zu einzelnen Stromentnahmestellen, z.B. Steckdosen, Licht- bzw. Wandauslässen, od.dgl. geführt sind, die zumindest zum Teil von Stromschaltstellen, z.B. Licht- bzw. Beleuchtungskörperschaltern, regel- bzw. schaltbar sind, wobei in den Stromschaltstellen jeweils eine Signalgeberschaltung vorgesehen ist und die regel- bzw. schaltbaren Stromentnahmestellen jeweils eine Signalempfangsschaltung besitzen, wobei zumindest eine, vorzugsweise zwei oder mehrere, die Stromschaltstellen zumindest mit den regel- bzw. schaltbaren Stromentnahmestellen verbindende(n) Steuerleitung(en) für Schwachstromsignale vorgesehen ist (sind), über die kodierte Schaltsignale von den Stromschaltstellen zu den Stromentnahmestellen zur Betätigung von Stromschalteinrichtungen, z.B. von Relais, Thyristoren, Triacs, in den Stromentnahmestellen übertragbar sind und wobei die Stromversorgungsleitungen mit der(n) Steuerleitung(en) in Form einer gegebenenfalls nicht geschlossenen, insbesondere horizontalen und davon abgehenden, insbesondere senkrechten Stichleitungen verlegt sind.

Aus der DE-A-2 800 472 und der DE-A-2 311 751 sind Stromversorgungsanordnungen bekannt, bei denen durch übertragene Schaltsignale die entsprechenden Schaltungen des Stromes bewirkt werden können. Durch Betätigung von Signalgebern werden diesen zugeordnete Signalempfänger geschaltet und damit Beleuchtungskörper, Geräte usw. betätigt.

Aus der US-A-3 083 307 ist ein in Form von Stichleitungen verlegtes Installationssystem bekannt, bei dem am Ende der Stichleitungen den Verbraucher absichernde Unterbrechereinrichtungen vorgesehen sind. Damit wird eine Aufteilung des Systems in eine Anzahl von parallelen Stromkreisen vermieden. Die Verlegung des Systems erfolgt in herkömmlicher Weise. Die Schaltung von Stromentnahmestellen, z.B. Lustern, kann jeweils nur von einem in der Stichleitung vorgeordneten Schalter erfolgen; Wechselschalter können nur in aufwendiger Weise vorgesehen werden.

Gemäss der US-A-4 215 276 sind mittels Stichleitungen Verbraucher an Schaltgeräte angeschlossen. Die Schaltgeräte besitzen elektronische Empfangsschaltungen, die über Steuerleitungen mit Schaltsignalen versorgt werden. Die Schaltsignale werden von Signalgebern bei deren Betätigung erzeugt. Damit wird ein ferngesteuertes Schalten der Verbraucher ermöglicht. Diese bekannte Anordnung lässt einen Ausbau relativ einfach zu, indem man an die Stromversorgungsleitung weitere Stromschaltstellen anschliesst, zu denen entsprechende Steuerleitungen verlegt werden; aufgrund der elektronischen Schaltsignalübertragung können leicht Zuordnungen von Schaltern und Schaltstellen vorgenommen bzw. abgeändert werden. Nachteilig ist jedoch, dass die Verlegung in herkömmlicher Weise durch Verbindung der einzelnen Leiter aufwendig ist, dass die Kontaktierung der Schalter, Steckdosen in herkömmlicher Weise arbeitsaufwendig ist, dass eine Verwechslung der Anschlüsse der Strom- und Steuerleiter schwerwiegende Folgen besitzen kann und dass keine Vorkehrungen bezüglich der Absicherung des Systems vorgesehen sind.

Aus der FR-A-2 338 600 ist eine Anordnung bekannt, die ähnlich der eingangs genannten Anordnung ist. In einer Stichleitung werden zwei Strom- und eine Steuerleitung(en) zwischen Impulsgebern und Verbrauchern verlegt. Über die Steuerleitung werden Signale den Verbrauchern zugeleitet, die sich entsprechend ein- oder ausschalten. Die Absicherung und die Verlegung sind bei dieser Anordnung nicht gelöst.

Aus der DE-A-2 340 266 ist ferner die Verlegung einer Flachleitung mit Hilfe von Abzweigstücken und an diesen anschliessbaren Wanddosen bekannt. Es handelt sich hiebei um eine ausschliesslich Stromleiter besitzende Flachleitung und um den Anschluss an bzw. die Verlängerung der Stromleiter.

Diese Offenlegungsschrift beschreibt eine unter Putz auf die Wand- und Deckenflächen zu verlegende Elektroinstallation für Häuser, die sich aus steckbaren Teilen in Flachbauweise mit grösstenteils starren, vorgefertigten Leitungsabschnitten mit harter Oberfläche zusammensetzt, wobei Kupplungsorgane (Stifte, Hülsen, Druckknopfverbindungen u.dgl.) dieser starren Teile sowie besondere Kupplungsglieder wie Eckstücke, Verzweigerstücke die Teile auch mechanisch starr miteinander verbinden. Diese Druckschrift beschreibt im wesentlichen den Einsatz von Flachleitungen und zugehörigen Anschluss- bzw. Abzweigstücken; eine wesentliche Vereinfachung der Elektroinstallation wird jedoch nicht erreicht, weil wie bisher Stromkreisaufteilungen vorgesehen werden müssen, um den Vorschriften Genüge zu tun, wobei jeder einzelne Stromkreis zwar in Form von Stichleitungen verlegt werden kann. Jeder Stromkreis kann zwar beliebig viele Steckdosen enthalten, benötigt jedoch für jede zu schaltende Stromentnahmestelle, z.B. einen Luster, einen zusätzlichen Leiter in der verlegten Flachleitung, so dass diese Verlegungsart nur für Primitivinstallationen ohne allzugrossen Leitungsaufwand einsetzbar ist. Ein Ausbau eines verlegten Systems ist nur für Steckdosen möglich, da eine zusätzliche Leitung nur unter nicht vertretbarem Aufwand verlegt werden kann; ein zusätzlicher Schalter, ein Wechselschalter od.dgl. ist nicht installierbar; die Verbindung der Leiter in den Wanddosen untereinander bzw. mit Schaltern und Steckdosen ist zeitraubend und bedarf Überlegungen; diese bekannten Systeme entsprechen im wesentlichen den herkömmlichen bekannten Elektroinstallationen, die mit Stegleitern vorgenommen werden, jedoch in der Praxis, aufgrund der Umrüstbarkeit von Systemen, bei denen die Stromleiter in Rohren verlegt werden, gegenüber diesen in den Hintergrund treten.

Aus der DE-A-3 004 950 ist ferner eine Wanddose bekannt, an die eine Anzahl von in einem Kabel geführten Stromleitern anschliessbar ist, wobei die Anschlüsse für die Stromleiter im Dosenboden verlängert sind und Leiterfahnen besitzen, die mit Kontakten von in die Dose einsteckbaren elektr. Geräten, Schaltern usw. verbindbar sind.

Keine dieser Anordnungen bietet jedoch die Möglichkeit, eine Stromversorgungsanlage zu erstellen, die rasch und kostengünstig errichtbar, betriebssicher, nahezu beliebig erweiterbar ist und ferngesteuerte Geräte besitzt.

Ziel der Erfindung ist es, ein einfach nachrüstbares und eine Vielfalt von Funktionen ausübendes Installationssystem einfach und kostengünstig zu verlegen, wobei die vorgeschriebenen Sicherheitsbedingungen berücksichtigt werden. Dieses Ziel wird durch die im Anspruch 1 angeführten Massnahmen erreicht. Es ist gegenüber dem Stand der Technik neu, die Strom- und Steuerleitungen gemeinsam in einer Flachleitung zu führen. Bekannte Flachleitungsinstallationen sehen keine Steuerleitungen vor; auch aus der FR-A-2 338 600 geht nicht hervor, dass die Strom- und Steuerleitungen gemeinsam in einer Flachleitung verlegt sind. Es wird in der FR-A zwar angegeben, dass die Stromleiter und Steuerleiter gemeinsam in Form von Stichleitungen verlegt werden; der Schluss, dass es sich nur um ein Kabel handelt, ist nicht zulässig, da bislang eine Verlegung von Starkstromleitungen und Schwachstromleitungen in einem Kabel verpönt war.

Darüber hinaus sind an sämtlichen erfindungsgemäss eingesetzten Bauteilen Kontakte und Leiter für die Steuersignale vorgesehen, die bislang bei den bekannten Anordnungen nicht erforderlich waren; dies gilt insbesondere auch für die Abzweigbauteile und Module. Die erfindungsgemässen Merkmale betreffend die Absicherung der in Stichleitungen verlegten Stromversorgungsleitungen gewährleisten die Sicherheit der Verlegung.

Es sind bei sämtlichen erfindungsgemäss eingesetzten Bauteilen gegenüber ihrer bekannten Ausbildung zwar nur mehr oder weniger geringe Abänderungen vorzunehmen; gerade diese Abänderungen ermöglichen es aber, in Summe ein System zur Verfügung zu stellen, das den Anforderungen der Installationspraxis völlig gerecht wird. Die erfindungsgemässen Merkmale des Systems ergänzen sich gegenseitig bzw. sind gemeinsam zur Funktion des Systems erforderlich, ohne dass sie jedoch eine Agglomeration bekannter Merkmale darstellen, da es sich zum Grossteil um für den speziellen Einsatzzweck neu vorgesehene Merkmale handelt.

Durch die gemeinsame Verlegung der Strom- und Steuerleiter in einem gemeinsamen Kabel wird eine beträchtliche Vereinfachung der Installation und der für die Installation aufzuwendenden Arbeiten erreicht. Überdies stehen an allen Orten, an denen Strom zur Verfügung gestellt wird, auch die Steuerleitungen zur Kommunikation bzw. zur Eingabe und zum Empfang von Steuerbefehlen zur Verfügung. Eine solche gemeinsame Verlegung bringt jedoch die Gefahr einer unzulässigen Verbindung der Verknüpfungsstellen mit sich. Etwa hätte eine Einspeisung von Leitungsstrom in Steuerkreise oder eine falsche Verbindung in den Steueradern schwerwiegende Folgen. Deshalb sind Verbindungs- und Abzweigbauteile vorgesehen. Die erfindungsgemäss weiters vorgesehenen Verbindungs- und Abzweigbauteile sowie die Wanddosen für einsteckbare Module können mit dem Kabel einfach und sicher verbunden werden, z.B. mittels Steckbuchsen, in die die abisolierten Enden der Leiter lage- und anschlussrichtig einführbar sind. Allein durch die durch die Belastung bedingten Dimensionsunterschiede zwischen Strom- und Steuerleitungen und damit der Steckelemente ergibt sich eine lage- un anschlussrichtige Verbindung. Dies trifft insbesondere dann zu, wenn als Kabel ein Flachkabel bzw. eine Flachleitung eingesetzt wird, weil hiebei auch noch die Formgebung Fehlverbindungen zusätzlich unterbindet. Da Flachleitungen nicht ohne weiteres in ihrer Ebene abgebogen werden können, sind die Abzweigbauteile auch für Abbiegungen sinnvoll. Auch aus Vorschriftsgründen (ÖVE) ist es zweckmässig, die Strom- und Steuerleiter in Form einer Flachleitung zu verlegen, bei der die Verwechslungsgefahr der Leiter beim Anschliessen noch weiter herabgesetzt ist.

Durch die gemeinsame Verlegung der Strom- und Steuerleiter zu jeder Stromentnahmestelle und jeder Stromschaltstelle wird die Vielfältigkeit und Ausbaufähigkeit der Anordnung erhöht. Bei einem Ausbau der Anordnung z.B. mit einer zusätzlichen Stromschaltstelle, ist diese lediglich in das verlegte Kabel einzubinden und die zu schaltende Einrichtung, z.B. ein Luster, mit dem nächstgelegenen Abschnitt des verlegten Kabels zu verbinden. Gleichzeitig können jedoch sämtliche Verlegevorteile von Kabeln mittels Winkelstücken, Abzweigstücken, usw. mitverwendet werden, so dass die Kosten der elektronischen Bauteile durch die billige Verlegung wettgemacht werden können. Voraussetzung hiefür war es jedoch, Winkelstücke und Abzweigstücke zu schaffen, in denen neben Leitern für den Strom auch Leiter zur Fortsetzung der in dem Kabel geführten Steuerleiter enthalten sind. Ein getrenntes, ausgesprochen aufwendiges Anschliessen der Strom- und Steuerleiter des Kabels, das leicht zu Fehlverbindungen mit schwerwiegenden Folgen führt, wird vermieden. In den an das Kabel anschliessbaren Dosen sind die Strom- und Steuerleiter mit Leiterbahnen verlängert, die mit entsprechenden lagemässig festgelegten Kontakteinrichtungen von als Module ausgebildeten Schaltern, Steckern usw. durch blosses Einschieben anschlussrichtig kontaktiert werden können.

Die Installation und das Nachrüsten einer Vielzahl von Stromversorgungsleitungen bei einem Ausbau der Anordnung, welche arbeitsaufwendig und kompliziert sind und mit langwierigen Stemmarbeiten verbunden sind, entfällt. Das umständliche Verlegen von Rohren in tief eingestemmte Mauerschlitze, das Einziehen von Drähten, deren Verbindungen und das Anschliessen der Stecker und Schalter kann durch einfachere, billigere und weniger zeitaufwendige Massnahmen ersetzt werden, wobei jedoch aufgrund der überallhin mitgeführten Steuerleiter auch nach Fertigstellung der Installation Änderungen bzw. Ergänzungen nahezu ohne Aufwand möglich sind. Schliesslich werden die Verlegevorteile einer mit Flachleitungen verlegten Anordnung bzw. die Vorteile einer Anordnung mit elektronischer Schaltsignalübertragung übertroffen, weil an sämtlichen Stellen des verlegten Kabels aufgrund der gleichzeitig vorhanden Strom- und Steuerleiter eine Stromentnahme und ein Empfang bzw. ein Senden der Schaltsignale möglich ist, wozu entsprechende Dosen und Module vorgesehen sind, die durch entsprechende Ausbildung der Kontakteinrichtungen gleichzeitig bezüglich Strom- und Signalempfang bzw. -abgabe mit dem Kabel kontaktierbar sind.

Bei einer bevorzugten Ausführungsform der Erfindung ist vorgesehen, dass die Steuerleitung(en) in der Flachleitung neben dem bzw. den, vorzugsweise nebeneinanderliegenden, Stromleiter(n), jedoch unter Ausbildung eines Zwischenraums zu diesem(n) angeordnet ist (sind). Dabei ist es zweckmässig, wenn im Zwischenraum der Erdleiter und/oder eine längsverlaufende Nut angeordnet sind, in der gegebenenfalls Montageausnehmungen bzw. -löcher und/oder Aussparungen bzw. Schwachstellen für Befestigungselemente, z.B. Setzbolzen, vorgesehen sind. Durch diese Anordnung wird die Höhe der Flachleitung gering gehalten und ihre Montage einfach; die Gefahr einer Beschädigung der Strom- und Steuerleiter bei der Montage wird weitgehend ausgeschaltet.

Vorteilhaft ist es, wenn die Flachleitung in bezug auf eine in deren Längsrichtung senkrecht verlaufende Mittelebene asymmetrisch ausgebildet ist, wobei vorzugsweise die Strom- und Steuerleiter asymmetrisch und/oder die Nut auf der Oberseite der Flachleitung asymmetrisch angeordnet sind und/oder die Kabel für die Aussenleiter grösseren Drahtquerschnitt aufweisen als die Steuerleitungen. Insbesondere bei diesem Aufbau der Flachleitung wird eine Verwechslung der Anschlüsse bei einer Verbindung der Flachleitung z.B. mit Wanddosen bzw. Verbindungsstücken ausgeschaltet, da die Anschlüsse der Form der Flachleitung angepasst werden können. In diesem Zusammenhang ist weiters erfindungsgemäss vorgesehen, dass in bzw. an der Wand der Dosen zum Anschluss für die Flachleitung zumindest eine an den Querschnitt der Flachleitung angepasste Einstecköffnung, gegebenenfalls mit Quetschnippel und/oder Lippendichtung, ausgebildet ist, die an die Lage der Stromleitungen bzw. Steuerleitungen angepasste Kontakteinrichtungen für die in den Flachleitungen enthaltenen Stromleiter und Steuerleitungen besitzen. Die Anschlussstücke der Wanddosen sind damit der Form und der Lage der Kontakteinrichtungen nach an die Flachleitung angepasst.

Der Kontakt zwischen den Strom- und Steuerleitungen und den in die Dosen einschiebbaren Moduln wird einfach und rasch durchgeführt, wenn die die Strom- bzw. Steuerleitungen der Flachleitung in den Dosen fortsetzenden Leiterbahnen und/oder die Kontakteinrichtungen der Module miteinander kontaktierbare Anschlussteile, z.B. Stecker, Buchsen, Schneiden, Feder-, Steck-, Rast-, Klemmverbindungen, Messerkontakte, Anschlussfahnen od.dgl., aufweisen. Gleichzeitig stehen in jeder Dose Strom- und Steuerleiter zur Kontaktierung zur Verfügung. Ein einfacher und betriebssicherer Aufbau der Dosen ergibt sich, wenn die Leiterbahnen im Bodenbereich der Dose verlaufen und gegebenenfalls zu einem zweiten, am anderen Ende der Wanddose gelegenen Anschluss für eine Flachleitung geführt sind. Gleichzeitig kann die Flachleitung nach Anschluss an eine Dose von dieser zu weiteren Dosen weitergeführt werden.

Eine einfache und rasche Verlegung der Strom- und Steuerleiter ergibt sich, wenn die Verbindungs- und Abzweigbauteile gegebenenfalls mit einem Quetschnippel bzw. einer Dichtungslippe versehene Winkelstücke und Abzweig- bzw. T-Stücke umfassen, die an die Lage der Strom- und Steuerleitungen in der Flachleitung angepasste Kontakteinrichtungen, z.B. Federklemmen, Schraubklemmen, nebeneinander angeordnete Anschluss- bzw. Quetschhülsen od.dgl. für die in der Flachleitung geführten Stromleitungen und Steuerleitungen aufweisen. Beschädigte Flachleitungen können leicht ausgetauscht werden, neue Flachleitungen können leicht angeschlossen werden, wobei bei jeder Abzweigung die Strom- und Steuerleitungen gemeinsam abgezweigt werden und keine Probleme hinsichtlich der Gefahr einer Vertauschung der Anschlüsse bestehen. Eine getrennte zeitaufwendige Abzweigung von Strom- und Steuerleitungen wird vermieden.

Bei einer weiteren bevorzugten Ausführungsform der Erfindung ist vorgesehen, dass insbesondere bei einer Querschnittsverminderung der Stromleiter in der zu den Stromentnahmestellen in den Wanddosen führenden Stichleitung den regel- bzw. schaltbaren Stromentnahmestellen und den Stromentnahmestellen mit freier Stromentnahme jeweils eine elektronische Fehlerstromüberwachungsschaltung zugeordnet ist, die z.B. von einer allen Stromleitungen und dem Nulleiter zugeordneten bzw. diese umgebenden, Spule, gegebenenfalls mit einem Ferrit bzw. Ferritspulenkernen, den Stromleitern zur Strommessung parallelgeschalteten, insbesondere hochohmigen Widerständen, Strommesswandlern od.dgl. gebildet ist, wobei der Ausgang der Fehlerstromüberwachungsschaltung mit der Steuerschaltung der jeweiligen Stromschalteinrichtung zu deren Abschaltung und/oder über die Steuerleitung(en) der Flachleitung mit der Zentrale zur Auslösung der Fehler- und/oder Überstromschutzschalter zur Leitungsunterbrechung verbunden ist. Bei derartigen Querschnittsverminderungen oder wenn die Stromleiter einen bestimmten Querschnitt überschreiten, um dem Verbraucher eine bestimmte Leistung anbieten zu können, ist die Absicherung in der Zentrale mitunter nicht ausreichend und es müssten gegebenenfalls für leistungsstarke Verbraucher eigene Stromkreise verlegt werden. Da bei der erfindungsgemässen Anordnung zu den Stromentnahmestellen nur Stichleitungen und keine eigenen Stromkreise geführt werden sollen, kann, wie angeführt, die notwendige Absicherung den Stromentnahmestellen zugeordnet werden. In den Stromentnahmestellen vorhandene elektronische Signalempfangsschaltungen bzw. die Stromschalteinrichtungen können in einfacher Weise mit den elektronischen Überwachungsschaltungen kombiniert werden, wodurch die notwendigen Schaltungen klein und betriebssicher gestaltet werden können.

Zweckmässig ist es, wenn dem Fehlerstromschutzschalter und/oder dem (den) Überstromschutzschalter(n) eine Empfangsschaltung für Abschaltsignale der Überwachungsschaltung(en) zugeordnet ist, mit der die Auslösevorrichtung für den Fehlerstromschutzschalter und/oder zumindest eines der Überstromschutzschalter betätigbar ist. Aufgrund der gemeinsam mit den Stromleitern überallhin verlegten Steuerleitungen können sämtliche Stromentnahmestellen hinsichtlich Überstrom- und Fehlerstrom überwacht werden, die Verlegung der Flachleitung ausschliesslich in Form von Stichleitungen vorgenommen werden und die erforderlichen Sicherheitsvorschriften übererfüllt werden, indem über die Steuerleitungen die zentrale Anschlussstelle mit den Fi- bzw. LS-Schaltern in die Endabsicherung der Stichleitungen mit einbezogen wird.

Der Bedienungskomfort wird erhöht und die Fehlersuche wird vereinfacht, wenn die Steuerschaltung der Stromschalteinrichtung eine Sendeschaltung für die Abschaltsignale der Überwachungsschaltungen bzw. diesen entsprechenden Signalen aufweist, mit der diese Signale über das Netz oder die Steuerleitungen an eine in der Zentrale befindliche Empfangsschaltung weiterleitbar sind. Vorteilhaft ist es ferner, wenn zumindest einer der Überwachungsschaltungen in der Stromentnahmestelle und/oder der an diese angeschlossenen Steuerschaltung eine als Störungsrückmeldeschaltung ausgebildete Sendeeinheit zugeordnet ist, mit der über das Netz oder über die Steuerleiter ein Rückmeldesignal bei einer Leitungsunterbrechung durch die Stromschalteinrichtung infolge einer Fehlermeldung zumindest einer der Überwachungsschaltungen an die Systemzentrale bzw. Zentraleinheit und/oder die entsprechende zugeordnete Stromschaltstelle weiterleitbar ist, und dass in der Zentraleinheit und/oder der Stromschaltstelle und/oder der Stromentnahmestelle selbst eine Anzeigeeinrichtung zur Anzeige der Art der Störung, insbesondere des Ortes der gestörten Stromentnahmestelle, vorgesehen ist. Hoher Komfort wird erreicht, wenn der Empfangsschaltung der Störungsrückmeldeschaltung in der Zentrale für die Fehlermeldungssignale der Überwachungsschaltungen eine Speichereinheit für zumindest eines oder aufeinanderfolgende Fehlermeldungssignale und eine Lichtanzeigevorrichtung zur Anzeige der Art des Ortes des Fehlers zugeordnet sind, wozu den Rückmeldesignalen ein Rückmeldekode, ein Fehlerkode und ein Adresskode der gestörten Stromentnahmestelle aufgeprägt ist.

Zur Erhöhung der Sicherheit der Absicherung mittels der elektronischen Überwachungsschaltungen kann erfindungsgemäss vorgesehen sein, dass den Überwachungsschaltungen eine Zeitüberwachungsschaltung zugeordnet ist, mit der bei Auftreten von eine gewisse vorgegebene Zeitspanne überschreitenden, eine Störung angebenden Signalen einer oder mehrerer der Überwachungsschaltungen der Steuerschaltung und/oder einer Schnell-Auslöseschaltung für die Fehler- und/oder Leitungsschutzschalter in der Zentrale ein Abschaltsignal zuführbar ist.

Um die Einsatzmöglichkeiten der Anordnung bzw. den Zugriff zur Anordnung zu erhöhen, ist erfindungsgemäss vorgesehen, dass an die Steuerleiter und/oder die Zentraleinheit anschliessbare Ein- und Ausgabeeinrichtungen vorgesehen sind, die Signalübertragungseinrichtungen, z.B. Sprechstellen, Kommunikationsleitungen anderer Stromversorgungskreise, Telephon usw. enthalten, als in die Dosen einsetzbare Module ausgebildet sind und mit den in den Dosen verlaufenden, die Steuerleiter in den Dosen fortsetzenden Leiterbahnen in Leitungskontakt bringbare Bauteile, z.B. Anschlussfedern, Stecker, Buchsen, Messerkontakte usw., aufweisen.

Zur Vereinfachung des Aufbaues der Flachleitung kann es sich als zweckmässig erweisen, dass einer der Steuerleiter vom Erdleiter gebildet ist.

Wesentlich ist das Zusammenwirken der einzelnen Merkmale. Aufgrund der Leitungsführung in Form von Stichleitungen ist eine elektronische Steuersignalübertragung zweckmässig. Das Vorsehen von Stichleitungen zieht die Anordnung von Absicherungselementen für Überstrom für die Stichleitungen sowohl in deren Endbereich als auch in der Zentrale nach sich. Auch zur einfachen Auffindung der gestörten Stelle ist eine Störungsrückmeldung zweckmässig. Das gemeinsame Führen von Strom- und Steuerleitungen in einer Flachleitung ist nicht üblich; es sind viele Systeme bekannt, bei denen die Steuersignale über das Netz geleitet werden oder eigene Steuerleitungen vorgesehen werden, die getrennt als Flachleitung geführt werden könnten. Schliesslich ermöglicht eine Flachleitung ein einfaches Verlegen der Stichleitungen, die phasenrichtig abgezweigt werden, wozu entsprechende Abzweigstücke vorgesehen sind, die ein rasches richtiges Anschliessen ermöglichen.

Durch die Erfindung wird insbesondere durch Kombination der einzelnen Merkmale ein neues Installationssystem erstellt, mit dem die Arbeitszeit zur Ausrüstung von Baueinheiten mit Elektroinstallationen drastisch reduzierbar ist; die Materialkosten können durch Serienfertigung der erforderlichen Elemente gering gehalten werden; die absolut anfallenden Materialmehrkosten werden durch die Arbeitszeiteinsparung bei weitem aufgewogen. Abgesehen davon kann die installierte Anlage beinahe beliebig umgerüstet werden bzw. Schaltfunktionen nachträglich vertauscht und ergänzt werden, was bei den üblichen Anlagen nur mit grossem Aufwand oder überhaupt nicht möglich ist.

Bevorzugte erfindungsgemässe Weiterbildungen und Ausführungsvarianten der erfindungsgemässen Anordnung sind in den Unteransprüchen enthalten bzw. in der Beschreibung und Zeichnung näher beschrieben. Fig. 1 zeigt ein prinzipielles Schaltschema der erfindungsgemässen Anordnung, wobei die wesentlichen Bauelemente im Grundprinzip dargestellt sind, Fig. 2 zeigt im Detail eine Flachleitung und eine Wanddose, Fig. 3 einen Schnitt durch ein Ende einer Wanddose, Fig. 4 ein Schema einer Empfangsschaltung bei den Stromentnahmestellen, Fig. 5 und 6 ein Schema einer Zentrale, Fig. 7 verschiedene Flachleitungen, Fig. 8 schematisch eine Wanddose, Fig. 9 ein Leitungsverlegungsschema, Fig. 10 verschiedene Stromentnahmestellen, Fig. 11 ein Schaltschema einer Zentrale, Fig. 12 ein Schema einer Signalgeberschaltung, Fig. 13 ein Schema einer Signalempfangsschaltung, Fig. 14 einen Steckermodul, Fig. 15 einen Schaltermodul, Fig. 16, 16a und 16b einen Absicherungsblock, Fig. 17 eine Wanddose und Fig. 18 ein Schema einer Stromentnahmestelle.

Die Grössenverhältnisse und die Anordnung der einzelnen Bauteile in den Figuren stimmen nicht mit den tatsächlichen Verhältnissen und Anordnung überein, sondern sind lediglich schematisch. Kombinationen der in der Beschreibung und den einzelnen Figuren beschriebenen und dargestellten Merkmale sind in sinnvoller Weise durchaus möglich.

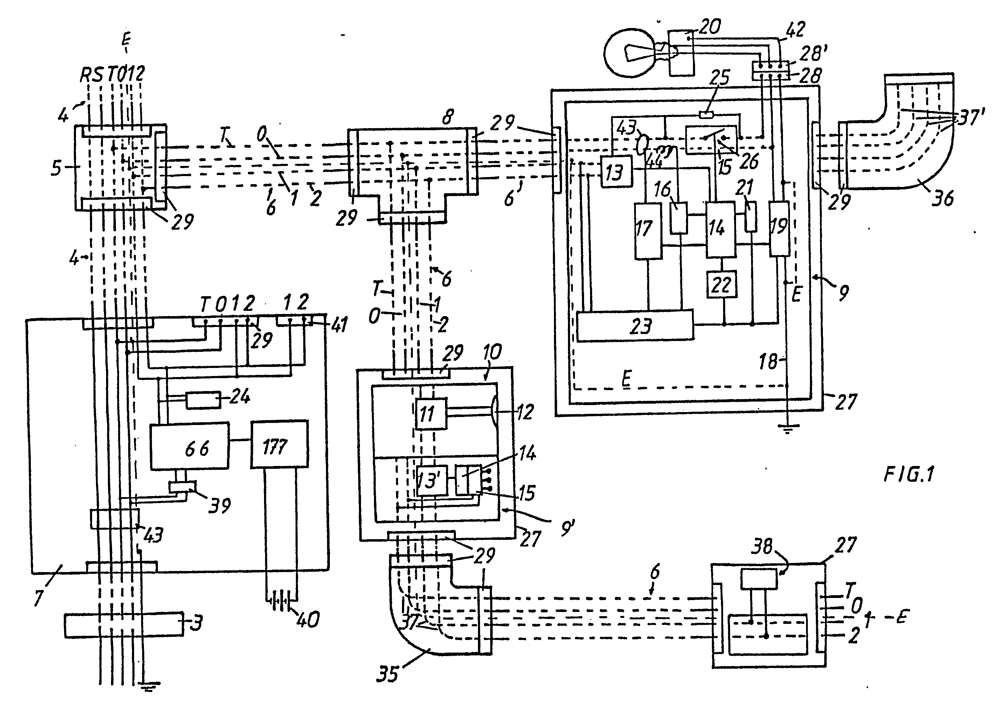

In Fig. 1 ist ein Stromanschluss bzw. Anschlusskasten 3, z.B. ein vom E-Werk aufgestellter Stromversorgungskasten oder ein Wattstundenzähler, dargestellt, an den im vorliegenden Fall nur ein Stromversorgungskreis bzw. nur eine Zentrale 7 einer erfindungsgemässen Installationsanordnung angeschlossen ist. In dem Anschlusskasten 3 können auch die Vorzählersicherungen und gegebenenfalls ein übergeordneter Fehlerstromschalter angeordnet sein. Wenn nur geringere Leistungen im zu installierenden Stromkreis nötig sind, so werden nur eine oder zwei Phasen, z.B. der T-Leiter und der Nulleiter angezapft, und die Stromversorgungsleitungen nur mit diesen beiden Phasen verlegt. Im dargestellten Fall wird jedoch in der in z.B. einer Wohnung bzw. Wohneinheit zu installierenden Anordnung, z.B. für eine Anzahl von Beleuchtungskörpern, Steckdosen usw., eine Hauptleitung eingeleitet, die nach Art einer Ringleitung vorzugsweise in Deckennähe oder bis zu einem Grossverbraucher, z.B. einem E-Herd, verlegt ist und von der in Abzweigbauteilen 5 ungesichert zweiphasige Stichleitungen 6 insbesondere mit schwächerem Querschnitt abgehen, um eine Anzahl entsprechend leistungsschwächerer Verbraucher zu versorgen. Es ist möglich, unter Berücksichtigung der Kapazität der Ring- bzw. Hauptleitung 4, eine entsprechende Anzahl von Stichleitungen 6 abzuzweigen, z.B.

unter der jeweiligen Verwendung der Phasen R-0, S-0 und T-0. Werden im Anschluss 3 nur eine Phase und der Nulleiter 0 angeschlossen, so könnte dies in Fig. 1 bedeuten, dass die Phasen R und S entfallen und anstelle der Ringleitung 4 eine Leitung entsprechend der Stichleitung 6 tritt, die sodann durch bzw. in die Zentrale 7 geführt ist und von der mittels T-Stücken 8 entsprechende Stichleitungen abzweigbar sind.

Bei der Installation wird vorteilhafterweise derart vorgegangen, dass die Stichleitungen 6 zu jeder Stromentnahmestelle 9, d.h. zu jeder Steckdose, zu jedem Auslass, zu jedem Verbraucheranschluss usw. verlegt werden. Ferner werden die Stichleitungen 6, der Einfachheit halber und um ein Nachrüsten noch mehr zu vereinfachen, auch zu den Stromschaltstellen 10, z.B. Schaltern, Thermostaten usw. verlegt, obwohl prinzipiell zu den Stromschaltstellen nur zur Kommunikation bzw. Steuerung dienende Steuerleitungen 1, 2 verlegt werden müssten. Da im Praxisfall jedoch Steckdosen oftmals neben oder unterhalb in Bodennähe von Schaltern angeordnet werden bzw. die Stichleitungen zu in Bodenbereich gelegenen Steckdosen weitergeführt werden, ist es zweckmässig, immer die Stromleitungen, im vorliegenden Fall für die Phasen T und 0, und die Steuerleitungen 1, 2 gemeinsam anzuordnen.

Prinzip der Erfindung ist es, dass zu jeder Stromentnahmestelle 9 und zu jeder Stromschaltstelle 10 nur eine Leitung und zwar in Form einer Flachleitung geführt ist; eine Verlegung von zusätzlichen Leitungen, z.B. für Wechselschalter, Mehrfachschalter usw., ist nicht notwendig.

In jeder Stromschaltstelle 10 ist eine Signalgeberschaltung 11 vorgesehen, die bei Betätigung eines Schalters oder Tasters 12 ein Signal in eine oder beide Steuerleitungen 1, 2 abgibt. (An sich würde eine Steuerleitung ausreichen; zur Stabilisierung der Schaltkreise ist jedoch ein Zwei- oder Mehrleiter-Kommunikationssystem vorteilhafter).

Gemäss Fig. 1 wird zwischen den Stromleitern und den Steuerleitungen bzw. zwischen dem Nulleiter 0 und der Steuerleitung 1 ein Erdleiter E mitgeführt. Zur Verdeutlichung einer Potentialüberwachungsschaltung 19 wurde der Erdleiter E, der bei Anordnung der später beschriebenen Potentialüberwachung 19 nicht erforderlich wäre, derzeit aber Vorschrift ist, teilweise nicht eingezeichnet. In der Praxis ist jedoch ein Erdleiter wenn nicht vorgeschrieben jedenfalls vorteilhaft, da er auch als Erde für die Signalübertragungsschaltungen bzw. die elektronischen Einrichtungen herangezogen werden kann. Es werden somit, wenn auch nicht ausdrücklich erwähnt, in den Flachleitungen, Abzweigbauteilen, Wanddosen, der Zentrale, den Steckdosen, Wandanschlüssen usw. jeweils Erdleiter und sofern erforderlich Anschlüsse für den Erdleiter vorgesehen. Die Erdleiter sind auch, insbesondere wenn sie zur Signalübertragung eingesetzt werden, an alle Schalteinheiten geführt, an die die Steuerleitungen angeschlossen sind, insbesondere an die Signalgeberbzw. -empfängerschaltung, die Störungsrückmeldeschaltung und die Absicherungs- bzw. Anzeigeschaltungen in der Zentrale 7. Die Ringleitung 4 enthält üblicherweise somit fünf oder sieben Leiter, die Stichleitungen 6 fünf Leitungen.

Jedes übertragene Steuersignal enthält eine bestimmte, der jeweiligen absendenden Stromschaltstelle 10 zugeordnete Charakteristik entsprechend einer gegebenenfalls fix eingespeicherten Kodierung und wird von der Signalgeberschaltung 11, z.B. in digitaler Form oder in Form frequenzmodulierter oder in bestimmter Reihenfolge anfallender Impulse, in eine oder beide Leitungen 1, 2 eingespeist. Das eingespeiste Signal wird in den Steuerleitungen 1, 2 an alle Stromentnahmestellen 9, in denen jeweils Signalempfängerschaltungen 13 vorgesehen sind, weitergeleitet. Die eine oder die mehreren Stromentnahmestellen 9, in denen der Stromfluss durch Betätigung der Stromschaltstelle 10 ein- bzw. ausgeschaltet werden soll, z.B. ein Stromauslass, an den ein Luster angeschlossen ist, weisen eine Signalempfängerschaltung 13 auf, die eine in Hinblick auf ihre Kodierung der zugeordneten Schaltstelle 10 entsprechende Signalerkennungsschaltung besitzt und wird in dieser mit einem darin gegebenenfalls fest eingespeicherten Signalmuster verglichen. In der bzw. den Signalerkennungsschaltungen, in denen festgestellt wird, dass das eintreffende Signal mit der eingespeicherten Kodierung übereinstimmt bzw. vorgegebene Kriterien erfüllt bzw. dass das Signal von einer dieser Stromentnahmestelle 9 zugeordneten Stromschaltstelle 10 kommt, wird einer Steuerschaltung 14 ein entsprechendes Schaltsignal zugeführt, die die Stromversorgung über eine Stromschalteinrichtung 15 ein- oder abschaltet. Als an die Steuerschaltung 14 angeschlossene Stromschalteinrichtungen 15 können Relais, Triacschaltungen, Halbleiterbauelemente, od.dgl. verwendet werden, insbesondere alle Stromunterbrechungsbauteile, die in Abhängigkeit von eintreffenden Steuersignalen einen Stromfluss beeinflussen bzw. unterbrechen können.

Wenn mehrere Stromschaltstellen 10 gleiche Kodierungen besitzen, kann eine Stromentnahmestelle 9 nach Art von Wechselschaltern von mehreren Orten aus geschaltet werden. In gleicher Weise kann von einer Stromschaltstelle 10 aus eine Mehrzahl von Stromentnahmestellen 9 geschaltet werden.

Anstelle eine direkte Kommunikation zwischen den Stromschalt- und Stromentnahmestellen vorzusehen, kann man vorsehen, dass die von den Stromschaltstellen 10 abgegebenen Signale nur in einer Signalempfangs- und Weiterleitungseinheit 66 in der Zentrale 7 erkannt werden. Dazu enthält diese eine sämtliche in die Stromschaltstellen eingespeicherte Kodierungen erkennende Erkennungslogik, in der jedem einzelnen eintreffenden Signal ein eingespeichertes festgelegtes Signal zugeordnet wird, das dann seinerseits in die Steuerleitungen 1, 2 eingespeist wird und zumindest von einer Signalempfängerschaltung 13 einer Stromentnahmestelle 9 als Schaltsignal erkennbar ist. Wenn eine Signalempfängerschaltung 13 eine auf dieses bestimmte Signal abgestellte Signalerkennungsschaltung besitzt, kann bewirkt werden, dass ein von einer Stromschaltstelle 10 abgegebenes Signal nicht mehr eine bisher zugeordnete Stromentnahmestelle 9 schaltet, sondern eine andere, durch die eingespeicherten Signale angesprochene Stromentnahmestelle. Durch Abänderung der Kodierung in der Signalgeberschaltung 11 bzw. der Kodierungserkennung in den Signalempfängerschaltungen 13 bzw. durch entsprechende Signalzuordnung in der Einheit 66 durch einfaches Austauschen von kodierten Chips können beliebige Stromschaltstellen und Stromentnahmestellen einander zugeordnet werden.

Mit 177 ist eine Aufnahme- bzw. Einschubeinheit bezeichnet, in die austauschbare Speicherchips eingebbar sind, mit denen eine Zuordnung der Schaltstellensignale zu den einzelnen Stromentnahmestellen abänderbar ist, wobei die Kodierung der Stromentnahmestellen beibehalten werden kann.

Die Stromentnahmestelle 9 ist somit auf Befehl schaltbar. Üblicherweise ist die Signalempfangsschaltung 13 derart ausgebildet, dass jedes eintreffende Signal einen Schaltvorgang bewirkt, d.h. dass bei Eintreffen aufeinanderfolgender Signale ein- , dann aus-, dann wieder eingeschaltet usw. wird.

Ferner sind Einrichtungen vorgesehen, um eine Gefährdung bei Erdschluss und Kurzschluss zu verhindern. Die Signalempfängerschaltung 13 gemäss Fig. 1 beaufschlagt die Steuerschaltung 14 für das Relais 15 mit Steuersignalen bei Erkennung eines zugeordneten Schaltsignals, worauf dieses schaltet. Zur Abschaltung des Stromflusses im Falle eines Kurzschlusses bzw. Überstromes ist eine Überstromüberwachungsschaltung 16 vorgesehen, die z.B. auf induktivem Weg oder durch Spannungsabtastung, von zumindest einem bzw. jedem Leiter feststellt, ob eine gewisse Stromstärke in der Stromleitung überschritten wird. Im Fall eines übermässigen Stromanstieges bzw. bei Überschreitung eines gewissen eingestellten bzw. vorgegebenen Stromwertes wird von der Überstromüberwachungsschaltung 16 an die Steuerschaltung 14 ein Abschaltsignal geleitet und diese unterbricht den Stromkreis zum Verbraucher, indem sie z.B. das Relais 15 öffnet. Die Strommessung kann auch auf elektronischem Weg, z.B. durch eine Potential-, Strom- oder Magnetfeldabtastung des Leiters, erfolgen, welches Abtastsignal direkt von dem elektronischen Schaltkreis der Steuereinheit 14 verarbeitet werden kann. Ähnliches gilt für eine Summenstromüberwachungsschaltung 17, die den Summenstrom in den Stromleitungen, z.B. auf induktivem oder kapazitivem Weg oder durch Spannungs-, Strom- oder Magnetfeldabtastung direkt oder durch Messung an Parallelwiderständen der Stromleitungen od.dgl. feststellt. Im Falle der Feststellung eines einen gewissen Schwellwert übersteigenden Fehlerstromes wird von der Summenstromüberwachungsschaltung 17 an die Steuerschaltung 14 ein Abtastsignal geleitet und von dieser der Stromfluss unterbrochen.

Um einen Masseschluss bei einem angeschlossenen Gerät, z.B. einem Luster, festzustellen, kann dessen Masseanschluss bzw. seine am Gehäuse 20 angeschlossene Erdleitung 42 in Hinblick auf einen Stromfluss gegenüber dem Nulleiter 0 oder einer allenfalls vorhandenen Erdleitung 18 mit der Potentialüberwachungsschaltung 19 abgetastet werden. Diese gibt ein Abschaltsignal an die Steuerschaltung 14, um bei Feststellung eines Potentials auf dem Masseanschluss bzw. Stromfluss durch einen abgetasteten Widerstand die Stromzufuhr abzuschalten.

Schliesslich ist noch eine Nullpunktschaltung 21 vorgesehen, die der Steuereinheit 14 Signale zuführt, so dass die Stromschalteinrichtung 15 immer in dem Augenblick schaltet, wenn der Stromfluss oder die Spannung ihren Nulldurchgang hat; damit wird z.B. die Lebensdauer von Glühlampen beträchtlich erhöht bzw. ein Einschalten eines Relais in einen Kurzschluss möglich. Die Nullpunktschalteinheit 21 bietet noch den Vorteil, dass den Kontakten des Stromschaltelementes 15, insbesondere Relaiskontakten, eine höhere Schaltleistung zugemutet werden kann. Dies spielt insbesondere im Kurzschlussfall eine Rolle, wenn die Steuerschaltung 14 das Relais 15 bei Kurzschluss oder höherem Überstrom schalten soll.

Eine an die Steuereinheit 14 angeschlossene Selbstüberwachungsschaltung 22 überwacht in Ruhe- und Betriebszustand die Stromentnahmestelle 9 und verhindert bei Defekt der einzelnen Schaltungen bzw. der Stromschalteinrichtung 15 ein Einschalten des Stromes bzw. sendet ein Abschaltsignal an die Zentrale 7.

Der Aufbau derartiger Abtasteinrichtungen bzw. Überwachungsschaltungen kann vom Fachmann bewerkstelligt werden. Die Überstromüberwachungsschaltung 16 kann austauschbar oder in Hinblick auf die Ansprechschwelle abänderbar ausgebildet sein, um verschiedene Absicherungen der Stromentnahmestellen z.B. mit 5, 10 15 A zu ermöglichen. Die Summenstromüberwachungsschaltung 17 kann auf einen Wert eingestellt werden, z.B. 30 mA, der für Menschen relativ ungefährlich ist.

Vorzugsweise sind sämtliche Schaltungen 16, 17, 19, 22 an eine Störungsrückmeldeschaltung 23 angeschlossen, mit der allfällige Abschaltsignale, die der Steuereinheit 14 zugeführt werden, auch in die Steuerleitungen 1, 2 in entsprechender Kodierung eingegeben werden. Über diese werden die Signale der Störungsrückmeldeschaltung 23 gegebenenfalls nachdem in der jeweiligen Stromschaltstelle 10 eine optische Anzeige erfolgt ist, der Zentrale 7 zugeführt, um dort gegebenenfalls eine Anzeigevorrichtung 24 zu betätigen, oder den Strom abzuschalten, wie später beschrieben wird. In dem den Signalen aufgeprägten Kode können Informationen hinsichtlich des Ortes der defekten Stromentnahmestelle und/oder der Art der Störung enthalten sein, die somit zentral ablesbar sind, wodurch die Störungssuche erheblich vereinfacht wird.

Wenn ein insbesondere hochohmiger Widerstand 25 parallel zu den offenen Schaltkontakten 26 des Relais bzw. Elementes 15 geschaltet wird, durch den Strom fliesst, wenn die Leiter T und 0, z.B. durch ein Elektrogerät bei dessen Einschalten über dessen Motor leitend verbunden werden, kann der geringe Stromfluss über den hochohmigen Widerstand 25 abgetastet werden und die Steuerschaltung 14 aktivieren. Mit 9' ist eine Steckdose mit einer Signalempfängerschaltung 13' dargestellt, die nur zur Störungsrückmeldung mit den Leitern 1, 2 verbunden ist und nicht von einer Stromschaltstelle 10 schaltbar ist, welcher Steckdose 9' nur Strom entnommen werden kann, wenn die Signalempfängerschaltung 13' einen eingeschalteten Verbraucher durch Abtastung des Widerstandes 25 erkennt.

Die in Fig. 1 dargestellte Stromschaltstelle 10 bzw. der den Schalttaster 12 und die Signalgeberschaltung 11 enthaltende Modul benötigt keinen Stromanschluss, deshalb wurden im Modul keine stromführenden Leitungen, sondern nur die Steuerleitungen 1, 2 dargestellt.

Zur Schaltung eines Lusters ist es möglich, an die Stromauslässe 28 der Stromentnahmestelle 9 die Drähte bzw. Leitungen, z.B. mittels Blockklemmen 28', anzuschliessen, die von dem in der Wand angeordneten Stromauslass zu dem in der Decke angeordneten Luster führen. Es wird damit die Verlegung vereinfacht, ohne auf die Vorteile der erfindungsgemässen Anordnungen verzichten zu müssen. Die Stromauslässe 28 sind so wie die restlichen Schaltungen und Leitungen schematisch gezeichnet.

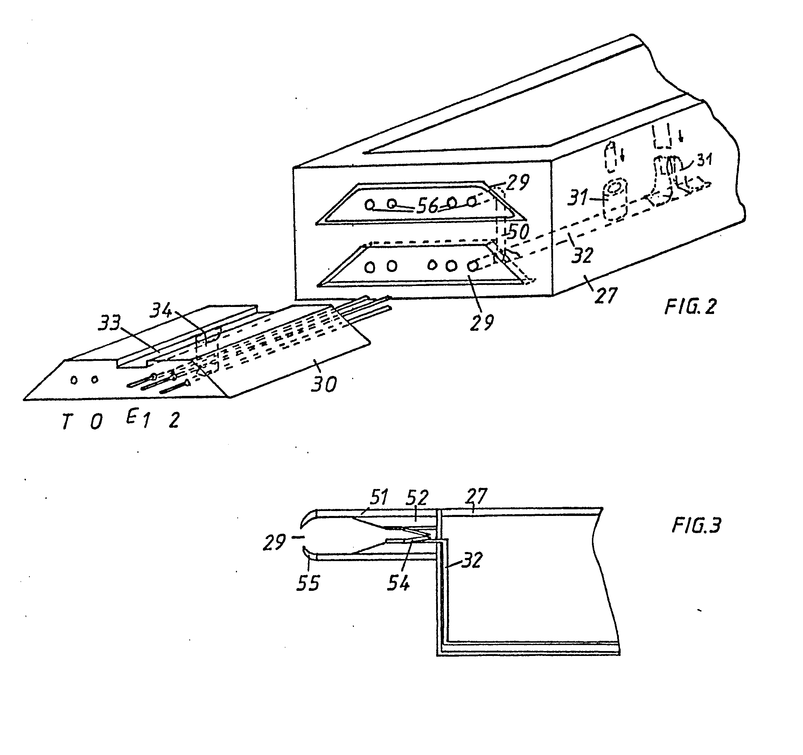

Die Bauteile 9 und 10 weisen in der Praxis etwa das übliche Aussehen von Steckdosen bzw. Tastschaltern auf, in deren Inneren die Schaltungen auf Chips bzw. Platinen angeordnet sind. Die Bauteile 9 und 10 werden in Modulform hergestellt und werden in Wanddosen 27 eingeschoben. Die Wanddosen 27 weisen, wie Fig. 2 zeigt, zumindest an einem Ende zumindest eine Anschlussöffnung 29 für die zu der Flachleitung 30 zusammengefassten Stromleitungen R, S, T, 0, den Erdleiter E und die Steuerleitungen 1, 2 auf. In den Wanddosen 27 verlaufen vorzugsweise blanke oder mit Anschlussstellen, z.B. Buchsen 31, Federkontakten 31' od. dgl., versehene Leiterbahnen 32 für die einschiebbaren Module. Die Leiterbahnen 32 sind von einem Ende der Wanddosen 27 zum anderen geführt; die Wanddosen 27 weisen gegebenenfalls am anderen Ende zur Weiterführung bzw. zum Anschluss einer weiteren Flachleitung 30 eine entsprechend gleichgeschaltete Anschlussöffnung 29 auf. Die Stromversorgung bzw. der Anschluss der Bauteile 9, 10 und anderer Module kann über in die Buchsen 31 bzw. Federkontakte 31' einsteckbare Stecker, Fahnen usw. von den Moduln abgehende Messer- bzw. Federkontakte usw., erfolgen. Aus diesem Grund sind in Fig. 1 die Ring- bzw. Stichleitungen 4, 6 nur bis zur jeweiligen Anschlussöffnung 29 eingezeichnet und beginnen erst wieder innerhalb der Bauteile 9, 10, um so die Stromabnahme der Bauteile 9, 10 in den Wanddosen 27 von den Leiterbahnen 32 über entsprechende Kontakte anzudeuten.

Alle mit den Flachleitungen 30 zu versorgenden bzw. an diese anzuschliessenden Bauteile und Elemente, die Abzweigbauteile, d.h. Winkelstücke, T-Stücke usw., Module, Zentrale usw. weisen dem Querschnitt der Flachleitung angepasste Anschlussöffnungen 29 auf. Allenfalls sind die Anschlussöffnungen 29 der aus Kunststoff bestehenden Wanddosen 27 abgedeckt bzw. ausbrechbar verschlossen, um die Enden der Wanddosen bei Nichtanschluss einer Flachleitung 30 gesichert zu haben.

Die Wanddosen 27 weisen Einbau- bzw. Einsatzmöglichkeiten für eine bestimmte Anzahl von Moduln auf und sind nachrüstbar bzw. die Module sind austauschbar. Es kann somit durch zusätzliches Einsetzen einer Schaltstelle 10 in eine Wanddose 27 und Auswechseln der Signalempfängerschaltung 13' durch eine Signalempfängerschaltung 13 eine abtastbare Steckdose in einen schaltbaren Stromauslass umgewandelt werden, ohne dass Kabel zu verlegen sind.

Die Wanddosen 27 können jeweils zwei übereinander angeordnete Anschlussöffnungen 29 aufweisen, von denen eine im Bereich der Oberseite und eine im Bodenbereich vorgesehen ist, die verwendet werden, je nachdem, ob die Wanddosen auf dem oder eben mit dem Verputz eingesetzt werden.

Die Strom- und Steuerleitungen sind zur einfachen gemeinsamen Verlegung zu einer vorzugsweise trapezförmigen oder rechteckigen Flachleitung 30 zusammengefasst. Die Trapezform ergibt eine gute Verankerung im Verputz und ermöglicht gleichzeitig die Wahrung einer Anschlussgeometrie, mit der ein fehlerhafter Anschluss der Stromleiter, T, 0 z.B. an Steuerleitungen 1, 2 vermieden wird. Die Montage der Flachleitung 30 ist einfach, da sie im Putz bzw. putzeben verlegt werden kann; ein Fräsen oder Stemmen im Ziegel oder Beton entfällt. Im einfachen Fall wird derart vorgegangen, dass die Flachleitung putzeben auf der Ziegelmauer befestigt wird, dass die Wanddosen putzeben eingestemmt werden und dass die Wand nach Aufbringen des Putzes tapeziert wird. In diesem Fall sind die Flachleitungen nur von Tapeten bedeckt, sind leicht zugänglich und es können nachträglich ober dem Putz an der Mauer Elemente 9, 9', 10 bzw. Kommunikationsanschlüsse 38 befestigt werden, die z.B. auch über in die Flachleitung einsteckbare Kontaktspitzen mit den Strom- und/oder Steuerleitungen in Verbindung bringbar sind.

Die Flachleitung 30 kann gegebenenfalls in der Mitte eine längsverlaufende Nut 33 besitzen, in der Montagelöcher 34 zur Befestigung der Flachleitungen 30 auf dem Verputz oder vor dem Verputzen auf der Mauer vorhanden sind. Auch mittels eines an den Anschlussöffnungen 29 der Wanddosen 27 bzw. den Anschlussöffnungen 29 der anderen Elemente, der Module, Abzweigstücke usw., angeformten, in die Nut 33 ragenden Fortsatzes, könnte die Anschlussgeometrie gewahrt werden. Die Anschlussgeometrie kann auch durch asymmetrische, aneinander angepasste Ausbildung der Anschlussöffnungen 29 und der Flachleitung 30 gewahrt werden.

Es können auch andere Formen für die Flachleitungen 4, 6 gewählt werden, z.B. kreissegmentförmige oder rechteckige Form mit z.B. gerundeten Kanten.

Mit Winkelstücken 35 und 36 kann die Flachleitung 30 umgelenkt werden. Zur Wahrung der Anschlussgeometrie müssen die Leiter 37, welche die Strom- und Steuerleitungen in den Winkelstücken 35 und 36 fortsetzen, einen bestimmten Verlauf besitzen. Bei einem in eine Richtung, z.B. im Verlauf der Stromleitungen nach vorne gesehen links abgehenden Winkelstück 36 verlaufen die Leiter 37' nebeneinander, wie im Flachleiter 30. Bei einem in die andere Richtung abgebogenen Winkelstück 35 jedoch kreuzt jeder Leiter 37 einmal jeden anderen der Leiter 37 genau einmal. Dies ist erforderlich, um die gegenseitige Anordnung der Strom- und Steuerleiter in – wie üblich – waagrecht und lotrecht verlegten Flachleitungen 30 beizubehalten. Gleiches gilt auch für die T-Stücke und wenn keine Steuerleitungen vorgesehen sind. Verwendet man in Fig. 1 anstelle des Winkelstückes 36 ein Winkelstück 35, so wird der Flachleiter 30 nach unten umgelenkt. Bei einer trapezförmigen Flachleitung ist die längere Trapezseite der Wand zugekehrt.

Mit 38 ist ein in eine Wanddose 27 einsetzbarer Kommunikationsanschluss bezeichnet, mit dem Signale in die Steuerleitung 1, 2 einspeisbar sind, mit denen bei entsprechender Kodewahl alle vorhandenen Signalempfangsschaltungen gesteuert werden können. An das System der Steuerleitungen kann somit eine Steuerzentrale an beliebigen Stellen angeschlossen werden. Der Bauteil 38 kann aber auch eine Gegensprechanlage sein, die über die Steuerleitungen 1, 2 mit an beliebigen Stellen angeschlossenen Gegenstellen verbunden ist. Der Bauteil 38 kann auch ein Raumthermostat sein, der seine Empfangsschaltung in einem, z.B. im Keller, an die Leitungen 1, 2 angeschlossenen Stellmotor für ein Mischventil hat.

In der Zentraleinheit 7 können Sicherungen 39 für die Signalempfangs- bzw. Weiterleitungseinheit 66 bzw. zentrale Elektronik für die Störungsanzeige bzw. ein Netzgerät für die Stromversorgung der Steuerleitungen, die Anzeigevorrichtungen 24 bzw. eine Batterie 40 zur Stromversorgung der Steuerleitungen 1, 2 bei Netzstromausfall vorgesehen sein. Hauptsicherungen, d.h. Leitungsschutzschalter und zumindest ein Fehlerstromschutzschalter für den dargestellten Stromversorgungskreis sind mit 43' bezeichnet.

In der Zentraleinheit 7 können auch Anschlüsse 41 für weitere Steuerleitungen 1, 2 vorgesehen sein, um die Zentrale 7 mit Zentralen 7 paralleler Stromversorgungskreise verbinden zu können.

Erfindungsgemässe Stromversorgungsanordnungen bzw. Zentralen 7, so wie in Fig. 1 dargestellt, können parallel zueinander an den Stromversorgungsanschluss bzw. Anschlusskasten 3 angeschlossen werden, um den Strombedarf einzelner Verbraucher günstig zu erfassen; so können z.B. in einem Einfamilienhaus einzelne Stromversorgungskreise für das Dachgeschoss, das Erdgeschoss und das Kellergeschoss vorgesehen werden. Wenn die Steuerleitungen der einzelnen Stromversorgungsleitungen, z.B. durch gegenseitige Verbindung der Anschlüsse 41 der Zentraleinheiten 7, zusammengeschlossen werden, können durch Stromschaltstellen in beliebigen Geschossen Stromentnahmestellen in beliebigen Geschossen geschaltet bzw. gesteuert werden.

In den Moduln können die Signalgeberschaltung 11, die Signalempfängerschalter 13, die Überstromüberwachungsschaltung 16, sowie die weiteren Schaltungen 17, 19, 21, 14, 15, 25 auf gemeinsamen oder eigenen Platinen angeordnet werden, die in den jeweiligen Modul einsteckbar sind.

Es ist für die Installation noch vorteilhaft, gerade verlaufende Kupplungsstücke vorzusehen, die Anschlussöffnungen 29 mit Federklemmen für die Flachleiter aufweisen, um die Flachleiter verlängern bzw. aneinander anschliessen zu können. Im Kupplungsstück sind durchlaufende Leiter 37 angeordnet, die wie in der Flachleitung 30 nebeneinander angeordnet sind.

Bei der einfachsten Ausführungsform der erfindungsgemässen Installation umfasst die Zentrale 7 neben Fehler- und Überstromschutzschaltern lediglich eine Spannungsquelle für die Steuerleitungen bzw. die elektronischen Schaltungen, die vorzugsweise mit 12 oder 15 V Gleichspannung beschickt werden.

Wird die Anschlussöffnung 29 etwas kleiner gehalten als der Querschnitt der Flachleitung 30, so ergibt sich eine gute Anlage von den um die Anschlussöffnung 29 vorgesehenen Lippendichtungen 55 bzw. Quetschnippeln an der Flachleitung.

In einer Doppel- oder Mehrfachwanddose, insbesondere Steckdose, kann z.B. auch nur ein Modul mit den Überwachungsschaltungen vorgesehen sein, der die Stromentnahme von mehreren parallel geschalteten Steckdosen oder einer Anzahl von nachgeschalteten Stromentnahmestellen überwacht, die sich gegebenenfalls in über weitere Flachleitungen angeschlossenen Wanddosen befinden.

Durch Anschluss eines in die Steuerleitungen 1, 2 einspeisenden Signalgebers können Steuerfunktionen, z.B. Steuersignale an die Heizung, das Einschalten einer Stiegenhausbeleuchtung, usw. an zu bestimmte Zeiten zu schaltende Verbraucher abgegeben werden. Derartige Signalgeber können in der Zentraleinheit oder an beliebiger Stelle an die Steuerleitungen 1, 2 angeschlossen werden.

Der Vorteil der erfindungsgemässen Installation beruht vor allem in dem günstigen Ineinandergreifen der möglichen Kommunikation, der Stromsteuerung-und-überwachung und dem einfachen Aufbau bzw. der einfachen Verlegung der verwendeten Einzelteile. Es ergibt sich gegenüber herkömmlichen Verlegungsarten eine beträchtliche Einsparung der Installationszeit; obwohl der Materialpreis sicherlich höher liegt als der der bisher verwendeten Materialien ergibt sich trotzdem eine Gesamtkosteneinsparung. Wenn die Summenstromüberwachungsschaltung 17 auf einen Wert kleiner als 30 mA eingestellt wird, so wird eine bei herkömmlichen Anlagen nicht erreichbare Sicherheit gewährleistet.

In bevorzugter Weise werden die Stromversorgungsanordnungen bzw. die Zentrale für eine Leistung von 15 kW ausgelegt und entsprechende Leiterquerschnitte für die Flachleitungen und Schutzschalter gewählt. Eine derartige Anordnung würde für alle Verbraucher einer üblichen Wohnung mit 80 m² ausreichen, wobei ein E-Herd über eine eigene Anordnung bzw. eine direkt von der Zentrale zu ihm geführte Flachleitung versorgt werden könnte.

Die Breite eines Flachleiters 30 kann etwa 20–40 mm, vorzugsweise 30 mm, seine Höhe ca. 5–7 mm betragen; für eine nachträgliche Verlegung in eine fertige Mauer ist daher lediglich im Putz eine Nut entsprechender Tiefe herzustellen. Es können auch mehr als zwei Steuerleitungen, z.B. drei oder vier, in der Flachleitung 30 vorgesehen werden, die gegebenenfalls auch abgeschirmt sein können.

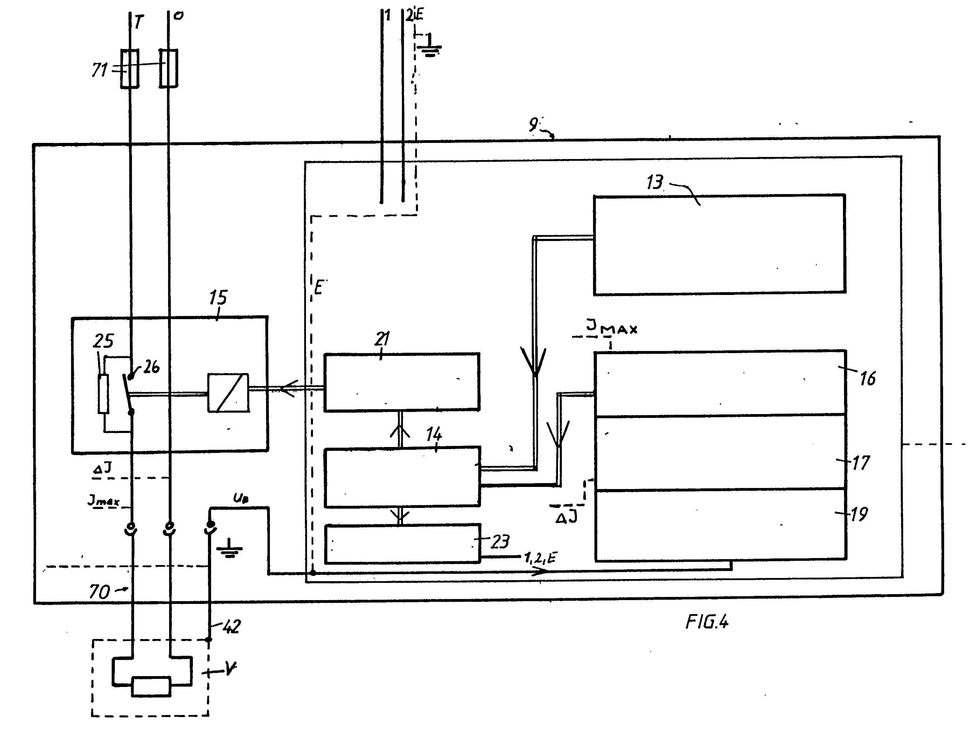

Fig. 3 zeigt einen Abschnitt einer Wanddose 27 im Schnitt, in die eine Anzahl von Moduln einsetzbar ist. Die Wanddose besitzt einen Anschlussteil 51, dessen Ende mit einer weichen Lippendichtung 55 versehen ist, die die an der Flachleitung angepasste Anschlussöffnung 29 umgibt. Im Inneren des Anschlusstelles 51 sind konische Kunststofführungen 52 für die abisolierten Enden der Leiter der Flachleitung 30 vorgesehen. Diese Kunststofführungen 52 führen den Draht in Federklemmen 54, so dass durch blosses Einstecken eine elektrische Verbindung herstellbar ist. Mit 32 sind die Leiterbahnen angedeutet, die von den Federklemmen 54 abgehen und durch die Wanddose 32 verlaufen, um den in der Wanddose 32 befestigbaren Modulen Kontakte nach deren Einschieben zu bieten (siehe Fig. 2).

Mit 50 werden in Fig. 2 elektrische Leitungsverbindungen zwischen den beiden Anschlussöffnungen 29 bezeichnet, welche Anschlussöffnungen 29 in bezug auf die Stirnwand der Wanddose 27 zurück in die Wanddose versetzt sein können, um Platz zum Einschieben der Flachleitung 30 zu bieten. Die Leiter des Flachleiters 30 sind dabei in die Öffnungen 56 der Anschlussöffnungen 29 und der Wanddose 27 einführbar. Anschlussöffnungen 29, an die keine Flachleitung 30 angeschlossen wird, können durch entsprechende Abdeckstücke verschliessbar sein (Fig. 2). Dosen gemäss Fig. 3 benötigen an sich kein Verschlussstück.

Wanddosen 27, die für eine Unterputzverlegung vorgesehen sind, besitzen eine Anschlussöffnung 29 bzw. einen Anschlussteil 51, der im Abstand vom Dosenboden im Bereich der Dosenoberseite gelegen ist. Bei Wanddosen 27 für Oberputzverlegung sind die Anschlussöffnung 29 bzw. der Anschlussteil 51 in Bodennähe vorgesehen.

Zur Erhöhung der Sicherheit kann von der Störungsrückmeldeschaltung 23 zumindest einem der sich in der Zentrale 7 befindlichen, die Anordnung überwachenden, insbesondere dem der entsprechenden Phase zugeordneten Überstromschalter und/oder Fi-Schalter oder einer entsprechenden Auslöseeinheit für diese Schalter ein entsprechendes Störungsrückmeldesignal zugeleitet werden, um eine Auslösung der Schalter vorzunehmen. Dies ist insbesondere wichtig für Stromentnahmestellen 9 ohne Stromschalteinrichtung 15. Bei geschalteten Stromentnahmestellen 9 kann diese Störungsrückmeldung zeitlich verzögert gegenüber dem Zeitpunkt der Störungsfeststellung erfolgen bzw. wiederholt werden; damit wird ein entsprechender Schutz gegeben, wenn eine Störung festgestellt wurde und die Steuerschaltung 14 trotz Störungsfeststellung nicht abschaltet bzw. abschalten kann, z.B. wenn aufgrund eines Kurzschlusses die Schaltkontakte 26 des Relais 15 zusammengebacken sind. Das wiederholte oder auch zeitlich länger bestehende Signal schaltet sodann entsprechend zumindest einen der in der Zentrale befindlichen Schutzschalter aus.

Zweckmässig ist es, die Chips bzw. Platinen der Signalgeber- oder -empfängerschaltungen 11, 13 mit Wähl- bzw. Kodiereinrichtungen, z.B. einsetzbaren oder entfernbaren Leiterverbindungen zu versehen, um eine beliebige nachträgliche Kodierung bzw. ein nachträgliches Versehen mit Kodenummern zur gegenseitigen Zuordnung zuzulassen.

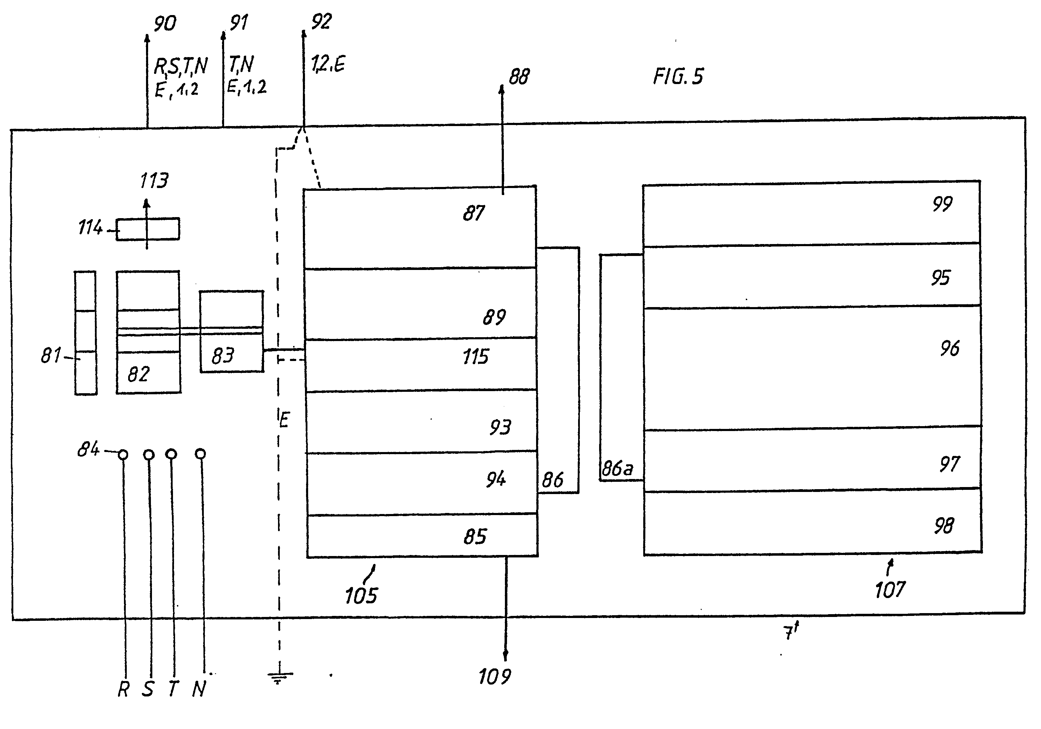

Fig. 4 und 5 zeigen in engem Zusammenhang mit Fig. 1 Ausführungsbeispiele für eine Stromentnahmestelle 9, 9' bzw. eine Zentrale 7.

In Fig. 4 ist ein Einschubmodul 9, z.B. eine Schuko-Steckdose für eine Wanddose 27 dargestellt. Ein Verbraucher V ist über eine Schukosteckvorrichtung 70 an die Stromentnahmestelle 9 angeschlossen. Die Phase T wird vom Relais 15 geschaltet. Der Nulleiter 0 kann ungeschaltet durchlaufen. Mit 71 sind Schutzschalter für die Leiter T und 0 in der Zentrale 7 bezeichnet, z.B. Leitungsschutzschalter der Type 16 AL, k-Faktor 2 bis 2,5.

Die Überstromüberwachungsschaltung 16 (eingestellt z.B. auf 5 oder 10 A, und ansprechend mit einer Verzögerung von z.B. 6–10 Halbwellen), die Summenstromüberwachungsschaltung 17 (eingestellt z.B. $\Delta J = 30$ mA) und die gegebenenfalls vorgesehene Potentialüberwachungsstellung 19 (eingestellt z.B. auf $U_B = 35$ oder 42 V) sind gemeinsam bzw. jeweils mit der Steuerschaltung 14 verbunden. Die Steuerschaltung 14 muss nicht, obwohl es vorgesehen sein kann, auf einzelne von den Schaltungen 16, 17, 19 kommende z.B. (Fehler)Signale ansprechen, sondern kann auch bei einer Störung beliebiger Ursache ein Störsignal aussenden, das die Nullpunktschaltung 21 veranlasst, die Schaltkontakte 26 des Relais 15 zu öffnen bzw. das der Störungsrückmeldeschaltung 23 zugeführt, die ein Störsignal zur Zentrale 7 abgibt, das nach gewisser Zeit gegebenenfalls wiederholt wird, wenn die Schaltkontakte 26 nicht geöffnet haben oder die Störmeldung bestehen geblieben ist.

In Fig. 5 ist unter Bezugnahme auf Fig. 1 bzw. Fig. 4 eine Funktionslogik für eine voll ausgebaute Zentrale 7 insbesondere für eine Anordnung für 15 kW Abnahmeleistung dargestellt, die Teil einer Anlage mit einer Mehrzahl derartiger Systeme sein kann.

Die Energieanspeisungen der Zentrale 7 vom Netz erfolgt mit $3 \times 220/380$ V mit Leitern R, S, T, N bei Schraubanschlüssen 84.

Ein Leitungsschutzschalter 81 für 2 A ist für die Energieversorgungsleitungen der Elektronik vorgesehen. Ein Leitungsschutzschalterblock 82 für $3 \times 25$ A, Kurzschlussfaktor 2,5 ist für die Leiter R, S, T, N, die von der Zentrale 7 abgehen, vorgesehen. Für diesen Leitungsschutzschalterblock 82 ist eine elektromechanische Schnellauslösung 83 vorgesehen, die von einer elektronischen Grundeinheit 105 in Abhängigkeit von eintreffenden Störungsrückmeldesignalen schaltbar ist. Einer Niveauschaltung 93 sind Signale der Störungsrückmeldungsempfangs- bzw. -auswertungsschaltung 89 zugeführt, die einer sich selbst überwachenden Auslöseschaltung 115 für die Schnellauslösung 83 zugeführt sind, die z.B. bei Beaufschlagung mit einem Signal der Niveauschaltung 93 die Steuerspannung eines Triac unterbricht, der dadurch stromlos wird und die Schnellauslösung 83, z.B. ein Abfallrelais, in Tätigkeit setzt, bzw. deren Haltestromzufuhr unterbricht, worauf der Schutzschalterblock 82 ausgeklinkt wird bzw. auslöst.

In der elektronischen Grundeinheit 105 ist ferner eine Spannungsversorgungsschaltung 87 für das Elektroniksystem bzw. die Steuerleitungen 1, 2 vorgesehen. Ferner kann ein Anschluss 88 an eine EDV-Anlage vorhanden sein. In der Grundeinheit 105 ist ferner eine Anzeigeschaltung 94 bzw. Anzeigevorrichtung 85 entsprechend der Anzeigeeinrichtung 24 in Fig. 1 vorgesehen, sowie ein Anschluss 109 für eine Batterie bzw. einen Akku 40.

Mit Steckverbindungen 86, 86A sind die Grundeinheiten 105 und die Steuerelektronik 107 in der Zentrale 7 einsteckbar.

Mit 114 ist ein den Versorgungsstromkreis absichernder Fehlerstromschalter mit 250 mA Ansprechwert bezeichnet, der als Summenstromwandler oder mittels Differenzstrommessung arbeitet.

Die Auslöseschaltung 115, die auch vom Fi-Schalter 114 über die Leitung 113 ein Steuersignal erhalten kann, löst somit zusätzlich zu ihrem eigenen Auslöseverhalten aus, wenn in der gesamten Anordnung ein Fehler- bzw. Überstromwert überschritten wird, z.B. ein $\Delta I \geqslant 250$ mA gemessen wird, wenn ein verlängertes bzw. nochmaliges Störungsrückmeldesignal einer beliebigen Stromentnahmestelle (z.B. Kontakte kleben) kommt, oder wenn eben die Auslöseschaltung 115 eine notwendige Auslösung vornimmt aufgrund einer Änderung des vorgegebenen Störungsniveaus in der Niveauschaltung 93.

Die Steuerelektronik 107 gemäss Fig. 5 besitzt ferner einen programmierbaren Speicher 99 für die Zuordnung der Signale bzw. Kodierungen und eine Eingabeeinrichtung 95 für zeitabhängige Steuerprogramme, z.B. für Heizungen. Mit 96 ist eine Tastatur zur Kodierungseingabe, Bedienung der Zentrale 7, Programmeingabe, Auslösung der Anzeigen usw. bezeichnet. Eine Programmspeicherbank 97, insbesondere über 88 mit einem EDV-System verbunden und eine Abfrageschaltung 98 für die Letztkodierung sind in 107 ebenfalls enthalten.

Der Summenstromwandler bzw. Fehlerstromschutzschalter 114 in der Zentrale 7 kann auch durch ein entsprechendes Störungssignal der Auslöseschaltung 115 bzw. einer der Störungsrückmeldeschaltungen 23 ausgelöst werden, so dass ein Abschalten bei Kurzschluss und Überstrom durch die Schnellauslösung 83 des LS-Blokkes 82 und bei Fehlerstrom durch den Fi-Schalter 114 erfolgt.

Die Zentrale 7 besitzt ferner Anschlüsse 90, 91 und 92 für Flachleitungen mit sieben (R, S, T, N, E, 1, 2), fünf (T, N, E, 1, 2) bzw. drei (1, 2, E) Leitern.

Bei der Verlegung einer bevorzugten Ausführungsform der erfindungsgemässen Anordnung wird folgendermassen vorgegangen:

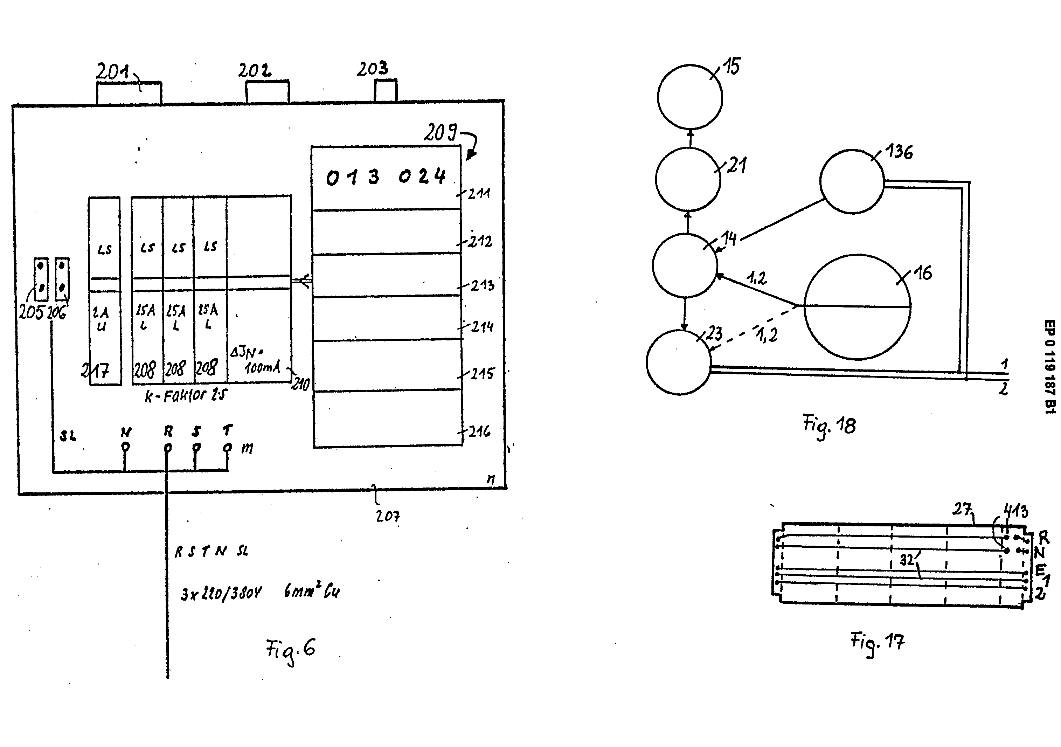

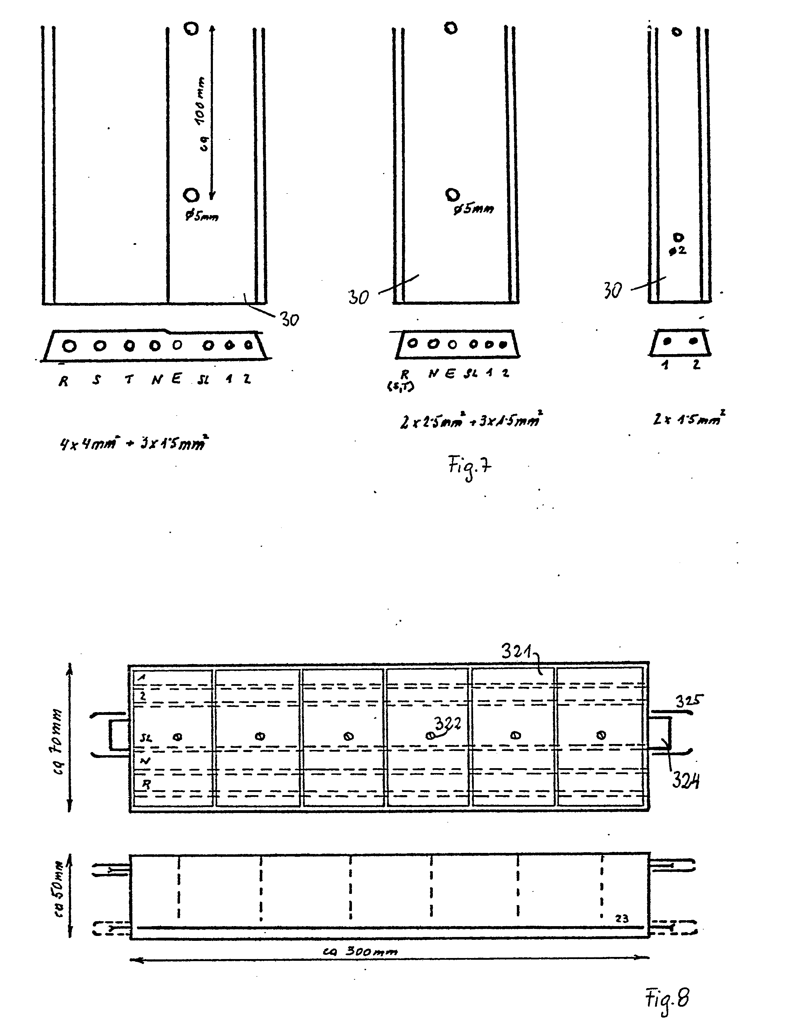

Eine anschlussfertige Standardzentrale 207 (Fig. 6) ist mit einer Absicherung von 25 A mittels dreier Leitungsschutzschalter 208 in Verbindung mit einer Fi-Fehlerstromschutzabschaltung 210 (Summenstromwandler) versehen. Die Leitungsschutzschalter 208 sind mit der Fehlerstromabschaltung 210 verklinkt bzw. gekoppelt, so dass kein eigentlicher Leitungsschutzschalter mit Trennkontakten, sondern nur der Auslöseteil erforderlich ist, mit dem einerseits bei von ihm festgestelltem Fehlerstrom die Leitungsschutzschalter ausgelöst werden, und der auch dann auslöst, wenn ihm ein Signal von der Auslöseschaltung 213 aufgrund einer Störungsrückmeldung (entsprechend 115 in Fig. 5) zugeführt wird. Ein Anzeigefeld 211, eine Rückmeldeempfangsschaltung 212, eine Störungsanzeigeschaltung 214, eine Energieversorgung 215 für die Elektronik und gegebenenfalls ein Speicher 216 für die letzte oder höchste Kodierung bilden den Elektronikbauteil 209. In der Zentrale 207 sind ferner Schutzerdeanschlüsse 205, 206, Schraubanschlüsse m für die Anspeisung und ein Leitungsschutzschalter 217 für die Stromzufuhr für die Elektronik vorhanden. Mit n ist das für Unterputz, Aufputz oder Feuchtrauminstallation geeignete Gehäuse der Zentrale 207 bezeichnet. Vom Elektronikbauteil 209 geht z.B. steckbar eine Flachleitung 301 (3 × 220/380 V, mit 5 Phasen, z.B. je 6 mm$^2$ oder 4 mm$^2$) inkl. zumindest einer Steuerleitung (z.B. je 1,5 mm$^2$) (Fig. 7a) ab und wird wie in Fig. 9 dargestellt bis zum E-Herd oder auch bis zur letzten (entferntesten) Raumanspeisung geführt. Von dieser Flachleitung werden mit den steck- oder klemmbaren Abzweigbauteilen zweiphasige Flachleitungen 302 (Fig. 7b) inkl. Steuerleitungen (z.B. 1,5 mm$^2$) abgezweigt. Nulleiter bzw. Erdleiter sind mitgeführt.

In den hier asymmetrisch ausgeführten Flachleitungen 301 und den Flachleitungen 302 und 303 sind in Abständen von z.B. 10 cm Durchgänge 327 (mit z.B. 5 mm Durchmesser) regelmässig angeordnet, so dass das ganze Leitungssystem schnell und rationell mit einem Bolzensetzgerät befestigt werden kann. Eine V-förmige oder rechteckige Nut zwischen den Strom- und Steuerleitungen ist zweckmässig, insbesondere zur Anbringung von Befestigungsklammern bzw. Führung des Setzgerätes.

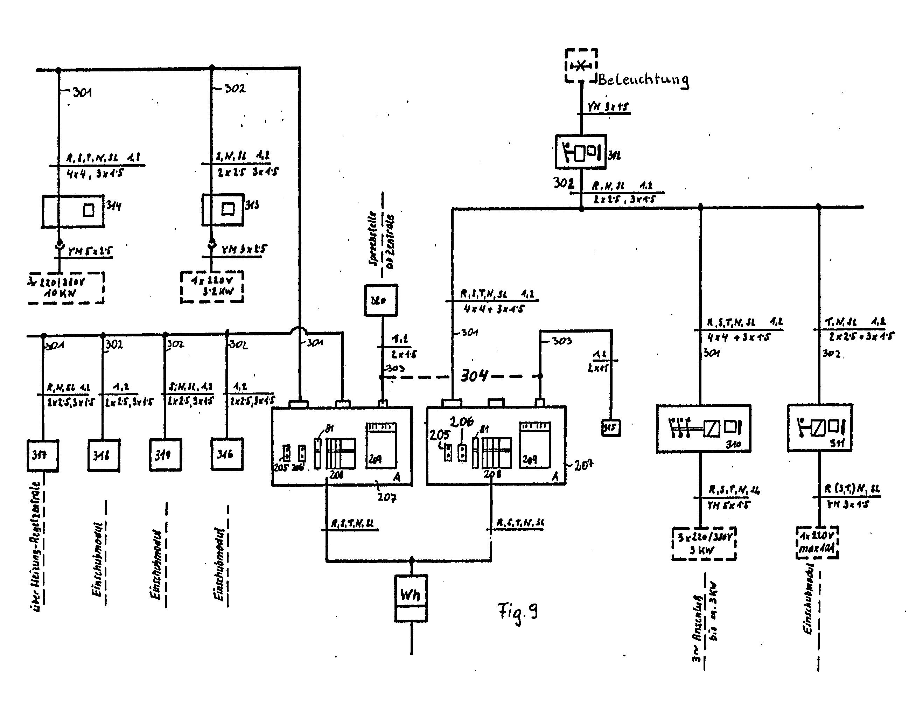

Die in Fig. 8 beschriebenen Wanddosen 27 werden mit Gipspflaster oder auch mit PU-Schaum putzeben befestigt. Die z.B. für ein, drei, fünf Modul(e) vorgesehene Wanddose 27 weist entsprechend viele abschraubbare Wegwerfdeckel 321, die mit Schrauben 322 befestigt sind, welche Schrauben auch zur Befestigung eines Moduls dienen, auf. Die im Dosenboden teilweise eingegossenen Leiterbahnen 323, die blanke Abnahmekontakte für die Module besitzen, weisen Steckvorrichtungen 324 bzw. Presshülsen auf, in die die abisolierten Leiter der Flachleitung 301 oder 302 einsteckbar und befestigbar sind. Anstelle der Steckverbindungen können auch schraubbare Blockklemmen treten. Mit 325 sind Überschubhülsen bzw. Einführungen für die Flachleitung bezeichnet.

Beleuchtungsauslässe werden installiert, indem man die vorgesehenen Ausgänge eines Schaltmoduls (Stromschaltstelle) 312 (Fig. 9) z.B. ein 3-poliges YM-Kabel oder auch eine Flachleitung ansteckt und an den Ort des Lichtauslasses führt.

Gemäss Fig. 9 sind zwei parallel arbeitende Standardzentralen 207, je 3 × 220/380 V, 15 kW (z.B. für zwei Stockwerke) vorgesehen, die von einem Anschluss Wh versorgt werden, von denen jeweils Flachleitungen 301 ähnlich einer Ringleitung mit abgehenden Stichleitungen, insbesondere zu leistungsstarken Verbrauchern geführt sind und 3 × 220/380 V (R, S, T, N), eine Erdleitung (SL) und Steuerleitungen 1, 2 enthalten. Von dieser Flachleitung ist ungesichert als Stichleitung mit geringerem Leistungsquerschnitt die Flachleitung 302 1 × 220 V (R, N) samt Erdleitung SL und Steuerleitung 1, 2 abgezweigt. Mit 303 sind nur Steuerleitungen enthaltende Flachleiter bezeichnet. Mit 304 ist eine Kommunikationsverbindung mit Steuerleitungen 1, 2 zur Übermittlung von Signalen bzw. Kodierungen zwischen verschiedenen Ebenen bzw. Stockwerken (z.B. durch übergeordnete Kodes) bezeichnet. 205, 206 sind die Anschlüsse der Schutz- bzw. Erdleiter in den Zentralen 207. Mit 307 sind 2A,U Leitungsschalter für die Elektronik, mit 308 ein LS-Fi-Block (3 × 35 A,L + 250 mA) bezeichnet. 310 stellt einen Auslass (3 × 220/380 V, 3 kW) dar, der geschaltet und kodiert ist. 311 stellt eine Schukosteckdose oder einen Fixanschluss (1 × 220 V, 10 A) dar, die (der) schaltbar ist bei Feststellung eines Strombedarfs (Eigenkodierung) oder durch eintreffende Steuersignale (Fremdkodierung). 312 ist ein Schaltmodul bzw. Auslass für eine Beleuchtung (1 × 220 V, 5, 10 A), geschaltet und kodiert, 313 ein Auslass für 1 × 220 V, 16 A, nicht geschaltet, jedoch voll überwacht, mit einer Steckvorrichtung mit einem YM-Kabel (z.B. Geschirrspüler), 314 ein Auslass für 3 × 220/380 V, 16 A, nicht geschaltet, jedoch voll überwacht, mit Steckvorrichtung (z.B. einem Herd). Ferner sind kodierte Geber 315 (z.B. Sensortaster), kodierte Geber 316 (Sensortaster), als Einschubmodule, ein schaltbarer kodierter Ausgang 317, z.B. für einen Stellmotor über ein Regelglied (Dreiwegventil Heizung), ein Ausgang 318 für eine Sprechanlage in Form eines Einschubmoduls + Hörer, ein kodierter Raumthermostat 319 (Geber), als Einschubmodul und ein Ausgang 320 der Sprechanlage, der direkt an die Steuerleitungen bzw. Anspeisung des Netzgerätes angeschlossen ist, vorgesehen.

Es sind in Fig. 9 somit zwei Stromversorgungskreise mit Steuerzentralen 207 dargestellt. Alle Einschubmodule sind über die Steuerleitungen 1, 2 miteinander bzw. den Zentralen verbunden. Zu allen Stromschaltstellen sind auch die Stromleitungen geführt.

Ohne weiteres kann auch ein im wesentlichen ident aufgebautes 1-phasiges Energieversorgungssystem mit vereinfachter Zentrale mit einer Leistung von z.B. 4,4 kW als alternative oder zusätzliche Möglichkeit installiert werden mit entsprechend geringeren Ansprechschwellen aller Absicherungen und Überwachungsschaltungen.

Für Geräte höherer Leistung bzw. bei Steckdosen, die nicht schaltbar sind, ist in der Steckdose bzw. den Auslässen 313, 314 gegebenenfalls kein Relais bzw. Stromschaltelement angeordnet, und die Überwachungsschaltungen melden Fehler an die Zentrale. In der Praxis ist es sinnvoll, eine Anzahl von Steckdosen normaler Leistung ohne Relais bzw. ungeschaltet und lediglich überwacht vorzusehen, aus denen bei Elektronikausfall – wie später besprochen – Strom entnehmbar ist, auch wenn die zentrale Absicherung bei Elektronikausfall vorerst ausgelöst wurde.

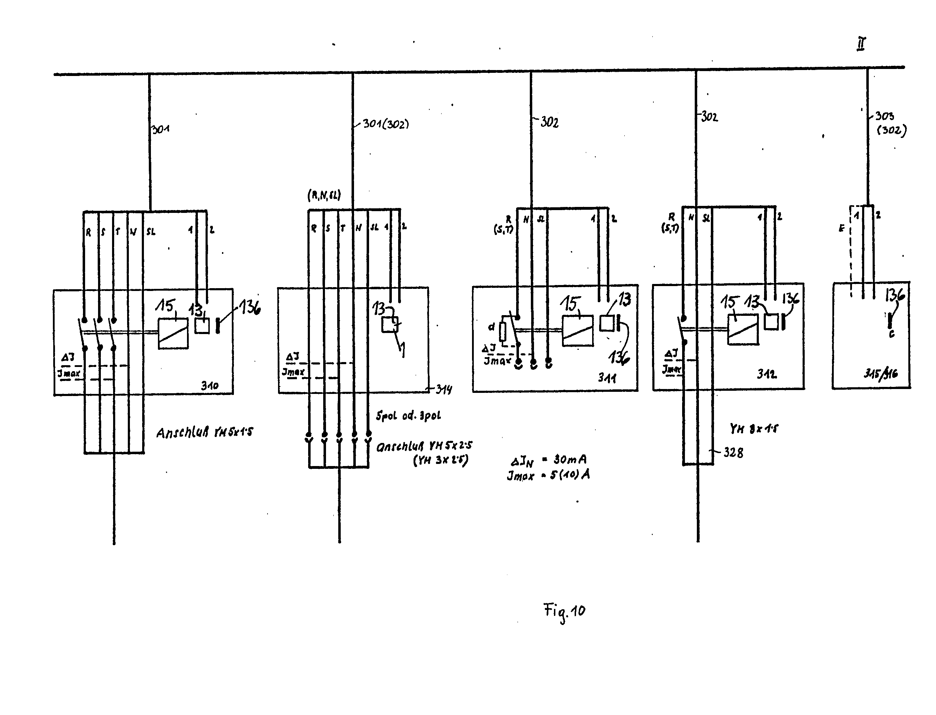

Fig. 10 zeigt ein Detail der Anordnung gemäss Fig. 9, wobei die Anschlüsse der Flachleitungen 301, 302 und 303 verdeutlicht sind und die Bauteile Stromschalteinrichtungen 15, Steuerschaltungen 14 und Kodiereinrichtungen 136 aufweisen.

Das Schaltrelais 15 hat in den geschalteten Stromentnahmestellen 9 auch die Aufgabe, bei Überschreitung von Jmax bzw. $\Delta J$ (z.B. bei einem Erdschluss) die Abschaltung des gestörten Ausganges zu übernehmen. Um die Schaltkontakte des Relais zu schonen, bzw. auch um ein Versagen des Relais zu berücksichtigen, schaltet das Relais 15 aufgrund der vorgesehenen Nullpunktschaltung nur bei Strom- oder Spannungsnulldurchgang. Die Nullpunktschaltung schaltet von etwaigen Phasenverschiebungen zwischen Strom und Spannung in der Anordnung unabhängig, insbesondere wenn der Spannungs- oder Stromnulldurchgang mit Ferriten bzw. Spulen von den Überwachungsschaltungen abgeleitet wird.

Die Abschaltzeit des Relais 15 ist mit einer Verzögerungsschaltung ferner so eingestellt bzw. verzögert, dass im Falle eines Kurzschlusses der nachgeordneten Leitungsschutzschalter oder Fi-Schalter in der Zentrale 7, gegebenenfalls in der entsprechenden Phase, früher als das Relais 15 die Abschaltfunktion (aufgrund seiner Eigenauslösecharakteristik) übernimmt, so dass der auftretende Kurzschlussstrom $J_K$ nie vom Relais 15 geschaltet wird.

In der Zentrale 7 sind z.B. drei Leitungsschutzschalter 25 A, 1-polig, K-Faktor 2,5, eingebaut, welche bei $J_K \approx 62$ A bereits ansprechen.

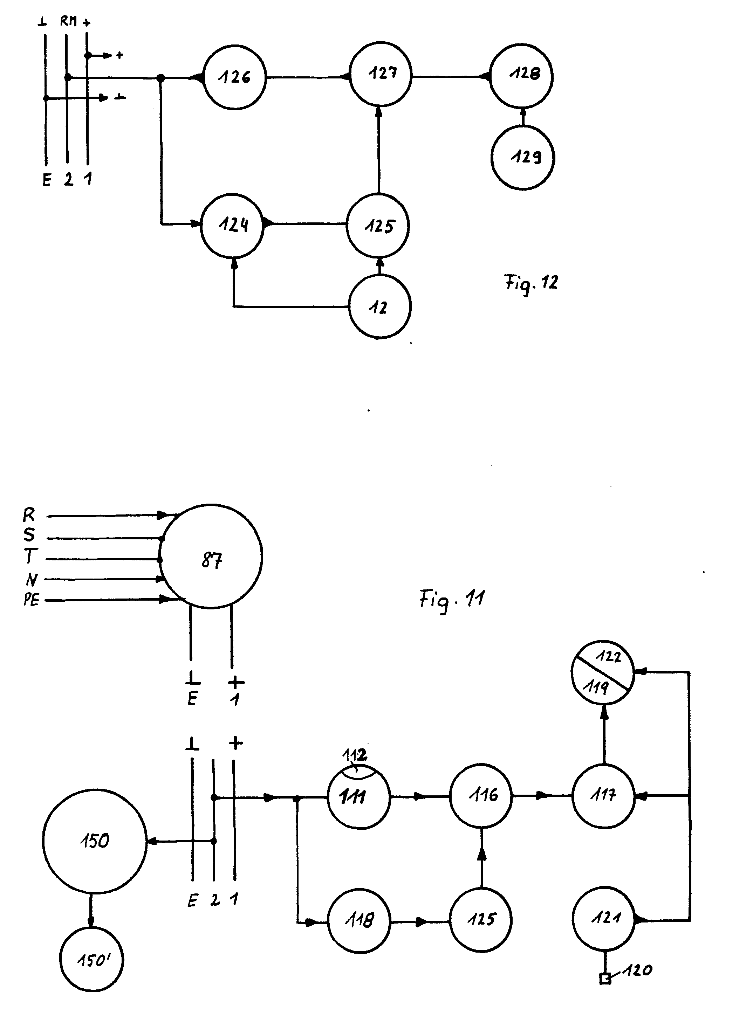

Fig. 11 zeigt den prinzipiellen Aufbau einer einfachen Ausführungsform des Elektronikbauteiles einer Zentrale 7.

Die Zentrale 7 enthält ein Netzgerät bzw. eine Spannungsversorgungsschaltung 87, welche(s) die Spannung für die einzelnen Schaltungen der einzelnen Module über die Steuerleitungen liefert ($\perp$, +15 V; ca. 3 A, je nach Ausbauphase des Systems). Im vorliegenden Fall wird der Erdleiter als Erdung der elektronischen Schaltungen verwendet. Über die Empfangseinheit 111 gelangt ein von einer Signalgeberschaltung 11 eines Moduls abgegebenes serielles Datensignal (Schaltsignal oder Störungsrückmeldesignal) in einen Seriell-Parallel-Umsetzer 116 und von dort in einen Zwischenspeicher 117 u.zw. nur dann, wenn eine Ausgabesperre 118 einen Taktgeber 125 freigibt, d.h. wenn das Datensignal zur Anzeige gebracht werden soll. Falls der Anzeigespeicher 119 leer ist (bzw. z.B. durch Betätigung der Taste 120 der Quittiereinrichtung 121 quittiert bzw. eine vorausgegangene Störungsrückmeldung gelöscht wurde) kann der Inhalt des Zwischenspeichers 117 in den Anzeigespeicher 119 geschrieben und damit auf der Anzeige 122 angezeigt werden. In der Zentrale 7 werden üblicherweise nur Datensignale, die von den Stromentnahmestellen 9 abgegeben werden und eine Störungsmeldung darstellen, empfangen bzw. zur Anzeige gebracht. Hiezu kann das Datensignal, das als Störungsrückmeldesignal auf die Steuerleitungen 1, 2 aufgegeben wird, eine entsprechende Kodierung enthalten, die von einem Adresskodespeicher 123 in der Signalgeberschaltung 11 der Stromentnahmestellen 9 dem Störungsrückmeldesignal aufgeprägt und in einer Erkennungsschaltung 112 der Empfangseinheit 111 der Zentrale 7 verglichen bzw. detektiert wird, um diese Rückmeldesignale von den von den Stromschaltstellen 10 ausgesandten Signalen zu unterscheiden. Auch in der Ausgabesperre 118 könnte eine entsprechende Signalüberprüfung stattfinden, so dass nur Störungsrückmeldesignale an den Zwischenspeicher 117 gelangen, der gegebenenfalls Platz für eine Anzahl von hintereinander eintreffenden Störungsrückmeldungen besitzt. Der Adresskodespeicher 123 versieht die die Adresse bzw. den Ort der Stromentnahmestelle enthaltenden Rückmeldesignale gegebenenfalls ferner mit einem die Art der Störung anzeigenden Kode, so dass auf der Anzeigevorrichtung in der Zentrale 7 Ort und/oder Art der Störung feststellbar ist. Die Signale enthalten gegebenenfalls noch einen Kode- bzw. Signalteil, der das Stromsystem bzw. die Phase charakterisiert, dem bzw. der diese Signale angehören. Schliesslich enthält die Zentrale 7 noch die Absicherung 151 mit den Schutzschaltern und dem Fi-Schalter, wobei zumindest einer der Schutzschalter und/oder der Fi-Schalter von einer Auslöseschaltung 150, z.B. einer mechanischen oder elektronischen Einrichtung, z.B. einer die Prüftastenkontakte des Fi-Schalters kurzschliessenden Einrichtung, einer Fehlerstrom im Fi-Schalter simulierenden Einrichtung, auslösbar ist bzw. sind. Die Auslöseschaltung 150 enthält über die Steuerleitung 2 die Abschaltbefehle in Form von Störungsrückmeldesignalen oder wird durch dieselben Störungsrückmeldungen aktiviert, die angezeigt werden.

Fig. 12 zeigt eine Signalgeberschaltung 11 in einem Sendemodul bzw. einer Stromschaltstelle 10, der zugehörige kodierte Stromentnahmestellen 9 schalten kann.

Beim Betätigen des Befehlsgebers bzw. Tasters 12 (Sensortaste, Niederspannungsschalter od.dgl.) wird über eine Empfangssperre 124 oder den Befehlsgeber selbst der Taktgeber 125 aktiviert. Dies kann nur dann geschehen, wenn die Empfangssperre 124 freigibt, d.h. wenn gerade keine andere Sendeschaltung der Module eine Daten- bzw. gegebenenfalls Rückmeldesignal auf die RM-Leitung schickt bzw. die Empfangssperre 124 nicht den Signalbeginn eines eintreffenden bzw. in der Kommunikationsleitung gerade übertragenen Datensignals festgestellt hat. Der Taktgeber 125 wirkt nun so auf einen Parallel-Seriell-Umsetzer 127 ein, dass dieser die im Adresskodespeicher 128 (Speicher, Schieberegister) insbesondere parallel gespeicherten Daten seriell an die Ausgabeeinheit 126 (z.B. Treiber) weitergibt, die das Datensignal auf die Kommunikationsleitungen schickt. Der Adresskodespeicher 128 weist gegebenenfalls einen Kodierer 129 auf, z.B. eine Kodierleiste mit Steckern, um die im Signal enthaltene Adresse und/oder Systemkennung abändern zu können.

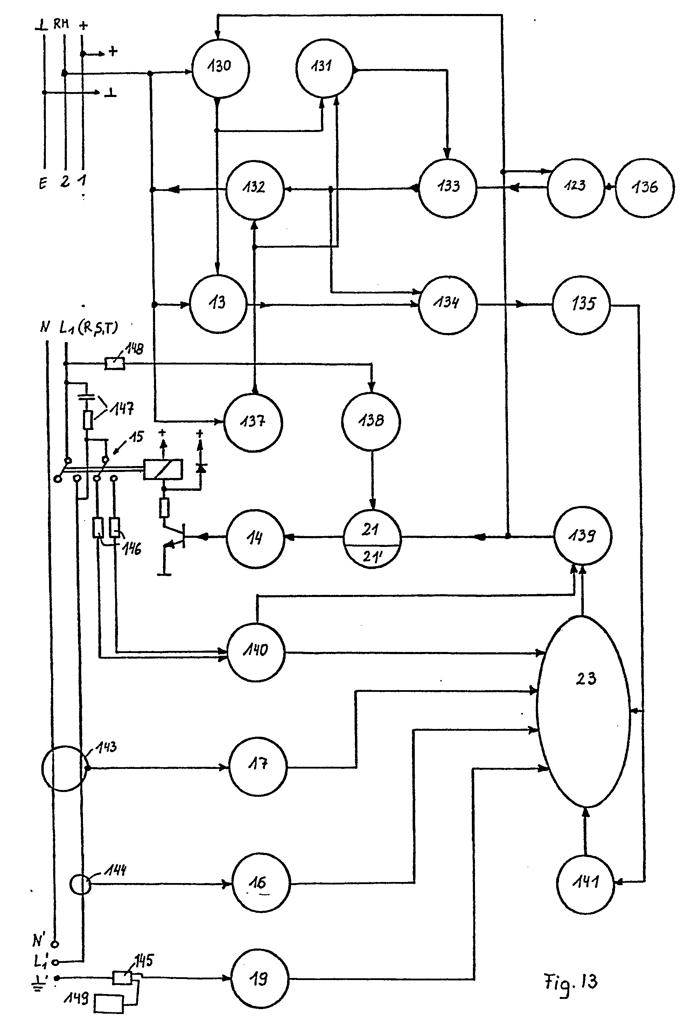

Fig. 13 zeigt eine Signalempfängerschaltung 13 in einer Stromentnahmestellung 9 mit den Überwachungsschaltungen. Die Stromentnahmestelle 9 ist mit dem Relais 15 schaltbar. Störungsrückmeldesignale können auf die Steuerleitung 2 aufgegeben werden.

Über die Signalempfängerschaltung 13 gelangt das von einer Schaltstelle bzw. einem Sendemodul (Schalter) abgegebene serielle Datensignal in einen Kodevergleicher 134. Dies kann nur dann geschehen, wenn die Empfangssperre 130 freigibt, d.h. wenn gerade kein anderes Sende- oder Empfangsmodul ein Datensignal auf die Steuerleitung schickt. Die Empfangssperre 130 sperrt gegebenenfalls auch, wenn Rückmeldesignale anderer Empfangsmodule übertragen werden. Der Kodevergleicher 134 vergleicht das empfangene Datensignal mit dem im Adresskodespeicher 123 kodierten Bitmuster, das mit Hilfe des Taktgebers 131 aus dem Adresskodespeicher 123 ausgelesen wird, und gibt bei Übereinstimmung der Signale ein Signal an einen Empfangsspeicher 135 weiter. Dieses Signal schaltet den Empfangsspeicher 135 um. Damit wird eine Überwachungsverzögerung 141 aktiviert und schaltet die Störungsrückmeldeschaltung 23 während des folgenden Einschaltvorganges kurzzeitig ab oder verzögert bzw. unterdrückt deren Ansprechen, so dass sie auf Einschaltstromstösse nicht anspricht. Eine Verzögerung des Ansprechens der Störungsrückmeldeschaltung 23 kann z.B. auch vorgesehen sein, wenn bei eingeschaltetem Relais 15 weitere angeschlossene Verbraucher extern eingeschaltet werden, indem eine Reaktion auf abrupte Stromstösse kurzzeitig unterdrückt wird; der Zeitpunkt dieses Einschaltens kann in einer Tastschaltung (Differenzierglied) erkannt werden. Ab dem Zeitpunkt des Einschaltsignals bzw. des tatsächlichen Einschaltens des stromunterbrechenden Elementes gibt ein Zeitverzögerungsglied die Störungsrückmeldeschaltung 23 erst nach Verlauf einer bestimmte Zeitspanne, z.B. 0,5 s, wieder frei, um Stromstösse unberücksichtigt zu lassen. Damit wird ein unbegründetes Abschalten des Relais 15 verhindert.

Die Störungsrückmeldeschaltung 23 gibt das Einschaltsignal an den Schaltspeicher 139, welcher die Nullpunktschaltung 21 aktiviert. Beim Nulldurchgang der Spannung oder des Stromes im Leiter L1 (R, S oder T) (im vorliegenden Fall wird der Spannungsnulldurchgang von der über einen Widerstand 148 den Leiter abfühlenden Nullpunkterfassung 138 der Nullpunktschaltung 21 gemeldet und im Spannungsnulldurchgang geschaltet) tritt eine Ein-Ausschaltverzögerung 21' in Aktion und beaufschlagt die Steuerschaltstufe 14 so, dass die Kontakte des Relais 15 unter Berücksichtigung der Schaltzeit des Relais bei Volllast im Spannungsnulldurchgang kontaktieren. Diese einstellbare Verzögerungszeit wird gegebenenfalls zusammen mit der Einschaltstromstösse berücksichtigenden Zeitspanne abgewartet, bevor die Störungsrückmeldeschaltung 23 wieder aktiviert wird.

In die Störungsrückmeldeschaltung 23 werden die Signale von zumindest einer der folgenden Überwachungsfunktionen bzw. -schaltungen eingespeist:

Eine Stromschaltelementkontrollschaltung 140 fühlt ab, ob das Relais 15 überhaupt eingesteckt ist, das Relais schaltet oder nicht schaltet, der Ausgang offen oder belastet ist, die Schaltkontakte des Relais 15 kleben oder gebügelt sind und gibt bei einer Fehlfunktion ein Signal an die Schaltung 23.

Die Fehler- bzw. Summenstromüberwachungsschaltung 17 erfasst den Fehlerstrom mit einem Stromwandler 143, z.B. eine Spule, durch die bzw. über die die laststromführenden Leiter (R, S, T, 0) oder (R, 0) (S, 0) oder (T, 0) geführt werden. Tritt nun ein Fehlerstrom auf, so ändert sich der magnetische Fluss im Stromwandler 143 und es tritt an seiner Sekundärseite ein Signal bzw. eine Spannung auf, das bzw. die gegebenenfalls mit einem Operationsverstärker verstärkt wird. Beim Überschreiten einer einstellbaren Schwelle, die dem maximal zulässigen Fehlerstrom entspricht, wird ein Signal an die Schaltung 23 gegeben.

Die Überstromüberwachungsschaltung 16 fühlt den Laststrom mit zumindest einem Stromwandler 144, z.B. einer Spule, ab, durch den bzw. die jeweils einer der laststromführenden Leiter (R oder S oder T oder 0) geführt wird. Die an der Sekundärseite des Stromwandlers 144 auftretende Spannung ist dem Laststrom proportional und wird gegebenenfalls mit einem Operationsverstärker verstärkt. Beim Überschreiten einer einstellbaren Schwelle (die dem maximal zulässigen Laststrom im Leiter entspricht) wird an die Schaltung 23 ein Signal abgegeben.

Bei der Fehlerspannungskontrolle bzw. Potentialüberwachungsschaltung 19 wird das elektrisch leitende Gehäuse der Last 149 bzw. des Verbrauchers über einen Widerstand 145 hochohmig an den PE- bzw. Erdleiter gelegt. Tritt infolge eines Fehlers im Verbraucher ein Schluss des Leiters L1 gegenüber Erde auf, bzw. wird das Potential der Erdung des Verbrauchers auf ein für den Menschen gefährliches Potential angehoben, so wird dies abgetastet und ein Signal an die Schaltung 23 abgegeben.

Wird die Störungsrückmeldeschaltung 23 durch ein Signal einer oder mehrerer der oben erwähnten Überwachungsschaltungen nach dem Einschalten des Stromschaltelementes 15 bzw. einem festgestellten Stromanstieg durch einen extern zugeschalteten Verbraucher, gegebenenfalls nach einer vorgesehenen Überwachungsverzögerungszeit, angesteuert, so gibt sie den Befehl bzw. ein Signal an den Schaltspeicher 139 weiter, der einen Abschaltbefehl an die Nullpunktschaltung 21 übermittelt. Mit dem folgenden Nulldurchgang der Spannung oder in Abhängigkeit vom unmittelbar vorhergehenden Nulldurchgang (wenn die Schaltzeit des Relais die Erreichung des nächsten Nulldurchganges zulässt) wird von der Ein-Ausschaltverzögerung 21' die Relaisausgangsstufe bzw. Steuerschaltung 14 so angesteuert, dass sich die Kontakte des Relais im Spannungs-(strom)nulldurchgang trennen.

Der Schaltspeicher 139 aktiviert aber neben der Nullpunktschaltung 21 auch die Empfangssperre 130, welche den Taktgeber 131 loslaufen lässt. Dieser steuert mit seinem Takt den gegebenenfalls vorhandenen Parallel-Seriell-Umsetzer 133 an, der die gegebenenfalls parallel gespeicherten Daten (Adresskode) aus dem Adresskodespeicher 123 (der gegebenenfalls vom Schaltspeicher 139 angesteuert wird, um die den Adresskode enthaltenden Signale auch mit einem der Störung entsprechenden Kode zu versehen) ausliest, sie in eine serielle Dateninformation umwandelt und an die Ausgabeeinheit 132 weitergibt, die das Datensignal auf die Steuerleitung RM bzw. 2 schickt, über die es zur Störungsrückmeldeanzeige in der Zentrale 7 gelangt und gegebenenfalls eine Auslösung der Auslöseschaltung 150 bewirkt, insbesondere dann, wenn es sich um ein Signal einer Störungsrückmeldeschaltung 23 einer Stromentnahmestelle 9 ohne stromschaltendes Element 15 handelt. Die Empfangssperre 130 desaktiviert während der Sendezeit die Signalempfängereinheit 13.

Stellen die Überstromüberwachungsschaltung 16 bzw. die Summenstromüberwachungsschaltung 17 bei eingeschaltetem Relais 15 einen Überstrom bzw. Fehlerstrom fest, so erfolgt das Öffnen der Relaiskontakte, z.B. unter Einfluss der Überwachungsverzögerungsschaltung 141 oder der Ein-Ausschaltverzögerung 21', verzögert, z.B. um zumindest eine Halbwelle, d.h. zumindest bis zum nächsten Strom- oder Spannungsnulldurchgang, um ein Öffnen der Relaiskontakte bei gefährlichen Stromspitzen zu verhindern. Tritt bei eingeschaltetem Relais ein Kurzschluss im Verbraucher auf, so bleiben die Relaiskontakte wie verschrieben vorerst geschlossen und der (die) schnellen LS-Schalter für die jeweilige(n) Phasen und/oder der Fi-Schalter (insbesondere bei Erdschluss) schaltet das System aufgrund des von ihnen erkannten zu hohen Stromflusses raschest vollständig ab, bevor die Relaiskontakte öffnen. Erfolgt ein langsamer Anstieg eines Über- oder Fehlerstromes, schaltet die Stromschalteinrichtung 15 zeitverzögert ab.

Beim Einschalten des Relais in einen kurzgeschlossenen Verbraucher verhält es sich ebenso. Nach Schliessen der Relaiskontakte im Spannungsnulldurchgang baut sich der Kurzschlussstrom auf und wird von der schnellsten reagierenden zentralen Absicherung ausgeschaltet, ohne dass das Relais 15 infolge der von der Ein-Ausschaltverzögerung 21' oder der Überwachungsverzögerungsschaltung 141 bewirkten Ausschaltverzögerung Schaden erleidet. In jedem Fall erfolgt eine Störungsmeldung in der Zentrael 7; mit einer die Blockierung der Verzögerungsschaltung 141 hinsichtlich Rückmeldungen im Kurzschlussfall aufhebenden Überbrückungsschaltung oder von der zwar überwachenden aber das Relais nicht bzw. nicht sofort schaltenden Störungsrückmeldeschaltung 23 wird das Störungsmeldesignal der Überwachungsschaltungen an die Sendeeinrichtung der Stromentnahmestelle geführt.

Bei Abgabe einer Störungsrückmeldung bei Fehler- oder Überstrom, der länger anhält als die Zeitspanne, für die die Ein-Ausschaltverzögerung 21' oder Verzögerungsschaltung 141 Stromspitzen unberücksichtigt lässt, an die Zentrale schaltet vorerst das Stromschaltelement 15 ab. Bleibt jedoch die Fehlermeldung trotzdem bestehen oder wird nach einer kurzen Zeitspanne nochmals derselbe Fehler detektiert (festgeschmolzener Relaiskontakt usw.), so wird von der Störungsrückmeldeschaltung 23 dieselbe oder eine veränderte Fehlermeldung nochmals an die Zentrale 7 abgegeben und bewirkt in der Erkennungsschaltung der Zentrale durch ihr doppeltes Eintreffen bzw. ihre Abänderung ein Abschaltsignal für die in der Zentrale vorgesehene Absicherung. Die Relaiskontrollschaltung 140 meldet dem Schaltspeicher 139 auch die Stellung der Relaiskontakte, um bei eintreffenden Schaltsignalen das entsprechende aufeinanderfolgende Ein- bzw. Ausschalten des Relais 15 sicherzustellen bzw. gibt eine Fehlermeldung bei Relaisfehlfunktionen ab.

Der Aufbau und die Funktionen der Schaltung in Fig. 13 entsprechen im wesentlichen dem (den) in Fig. 1; die grundlegenden Funktionen sind vergleichbar.

Das Ein- und Ausschalten der Störungsrückmeldeschaltung 23, um durch von Einschaltstromstössen herrührende Signale nicht gestört zu werden, ist nicht zwingend erforderlich; ein Abschalten des Relais bzw. eine Störungsrückmeldung bei Einschaltstromstössen kann auch auf andere Weise elektronisch unterdrückt werden.

Ist kein Relais 15 vorhanden bzw. handelt es sich um eine ungeschaltete Stromentnahmestelle, so können insbesondere die Schaltungsteile 138, 148, 21, 21', 14, 140 und gegebenenfalls 139 bzw. die Funkenunterdrückung 147 entfallen.

Bemerkt wird, dass durch die vorgesehene Signalübertragung und Absicherung der Einsatz von Flachleitungen erst in sinnvoller Weise möglich wird.

Der Sendeteil der Signalempfängerschaltung gemäss Fig. 13 ist im wesentlichen so aufgebaut wie die Signalgeberschaltung einer Stromschaltstelle.

Ein Kodierer 136 ermöglicht ein Umkodieren der Adresskodespeicher 123, 128, um die Signalgeber- bzw. -empfängerschaltung an andere Signalempfänger- bzw. -geberschaltungen anpassen zu können, bzw. den Systemkode ändern zu können. Die die speziellen Störungen anzeigenden Kodes werden vorteilhafterweise vereinheitlicht und immer beibehalten, obwohl auch sie abänderbar sind.

Dazu kann der Kodierer 136 in Form eines Speicherzubehörteiles, z.B. einer Steckleiste mit Kodiersteckern, ausgeführt sein.

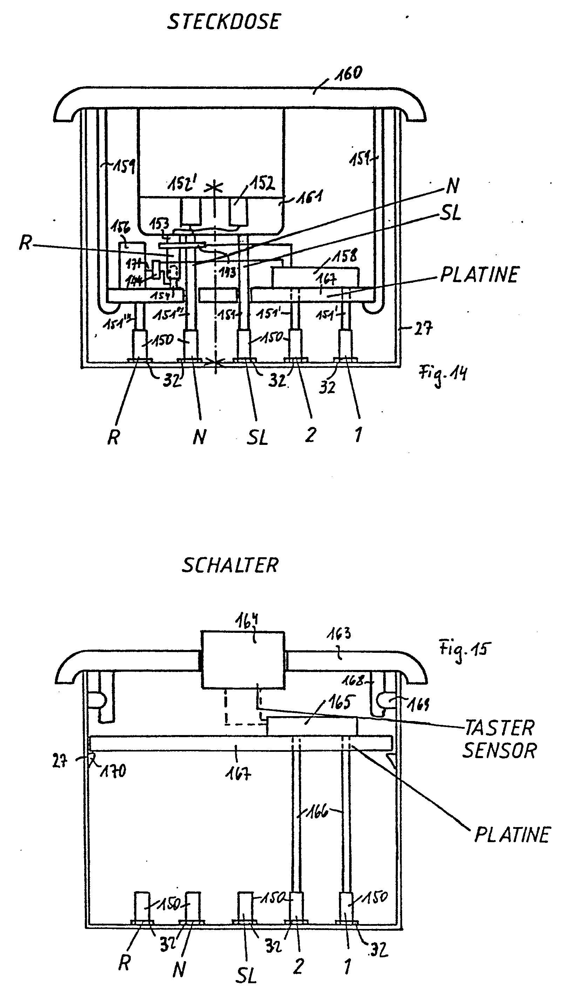

Fig. 14 zeigt ein Ausführungsbeispiel für einen in eine Wanddose 27 eingesetzten Steckdosenmodul mit einer Abdeckplatte 160, einen Steckeinsatz 161 mit Steckbuchsen 152 und 152', Kontaktstiften 151, 151" und einer Kontakthülse 153 (die allerdings auch ein Kontaktstift sein kann). Die Kontaktstifte 151, 151" sind in Steckbuchsen 150 einsteckbar, die von den Leiterbahnen 32 getragen sind; im vorliegenden Fall kontaktiert der Stift 151" den N-Leiter und der Stift 151 den Erdleiter SL. Die Stifte 151' führen zur Elektronik 158, die auch mit dem Stift 151 kontaktiert ist. Die Kontakthülse 153 nimmt einen Kontaktstift 154 auf, der von einer Platine 167 getragen wird, auf der die Elektronik 158 in ihrer Gesamtheit angeordnet ist. Die Platine 167 trägt ferner das von der Elektronik 158 geschaltete Relais 15, dessen einer Kontaktanschluss über den Kontaktstift 151"' über die Steckbuchse 150 mit dem R-Leiter, d.h. der stromführenden Phase, verbunden ist. Der Kontaktanschluss des Relais 15 ist über eine Leitung 171 an den Kontaktstift 154 (kann auch eine Hülse sein) geführt. Die Kontakthülse 153 ist mit der Steckbuchse 152, der Stift 151" mit der Steckbuchse 152' und der Stift 151 mit nicht dargestellten Erdungsanschlüssen des Steckeinsatzes 161 verbunden.

Mit 143 ist der den R- und 0-Leiter umgebende Fehler- bzw. Summenstromwandler, mit 144 die die Leitung 171 (mit Phase R) umgebende Abtasteinrichtung für Überstromwandler bezeichnet, die jeweils mit der Elektronik 158 verbunden sind. Beim Zusammenbau wird die Platine 167 in die Wanddose 27 eingesteckt und sodann der Steckermodul mit den Trägern 159 auf die Platine 167 aufgerastet. Dieser schematische Aufbau einer Stromentnahmestelle mit schaltbarer Phase und Überwachungseinrichtungen ist einfach und betriebssicher.

Fig. 15 zeigt beispielsweise einen in eine Wanddose 27 eingesetzten Schaltermodul mit einer Abdeckplatte 163, in der ein Schalter, Taster 164 od. dgl. angeordnet ist, dessen Schaltimpulse an eine Geberelektronik 165 übertragen werden. Die Elektronik 165 und gegebenenfalls auch der Taster 164 werden von der Platine 167 getragen, die gegen Ansätze 170 abgestützt ist und Stifte 166 trägt, die in die Steckbuchsen 150 der Leiterbahnen 32 für die Kommunikation eingesteckt sind. Die Abdeckplatte 163 kann mit Fortsätzen 168 an Vorsprüngen 169 gehalten werden. Zweckmässig ist auch der Erdleiter SL über einen Stift mit der Elektronik verbunden.

Bei den Überwachungsschaltungen für den Steckermodul können Spulen bzw. bewickelte Ferrite die Stifte des Steckereinsatzes umgeben, welche Stifte dann möglichst nahe beieinander geführt sind. Auch der Einsatz von Halbleiterstromwandlern ist hiefür möglich.

Die Steuerleitungen können auch von Glasfaserleitungen gebildet werden. Die entsprechenden zu übertragenden elektrischen Signale werden in bekannter Weise in den Glasfaserleiter ein- und ausgekoppelt.

Bevorzugt ist es, wenn die Steckerkontakte der Leiterbahnen der Wanddosen L- oder T-Form besitzen und mit dem Schenkel des L bzw. den Schenkeln des T an den durchlaufenden Leiterbahnen befestigt, z.B. angenietet oder angeschweisst sind, die von entsprechenden Kontakten der Module aufgenommen werden oder dass in den Leiterbahnen zumindest eine U-förmige vom Dosenboden wegragende Abbiegung ausgebildet ist, die in Buchsen am Modul einführbar ist.

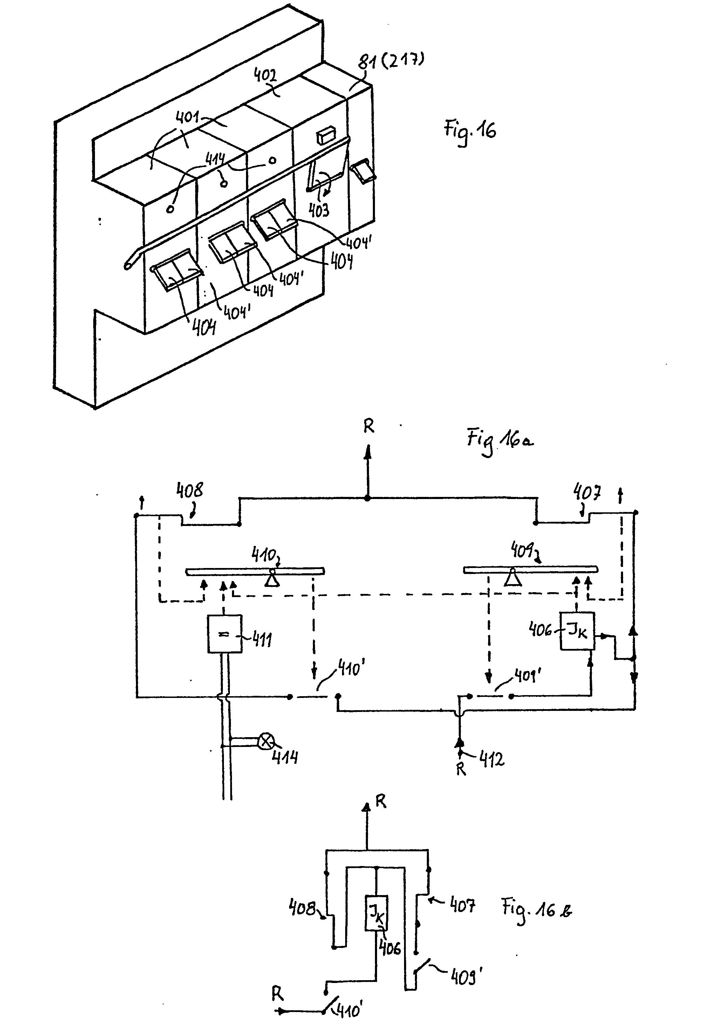

Fig. 16 zeigt eine Absicherung bestehend aus drei LS-Schaltern 401 und einem Fi-Auslöseblock 402. Der Auslösehebel 403 des Fi-Schalters 402 trägt einen Bügel 405, der sich über alle Auslösehebel 404, 404' erstreckt. Löst der Fi-Block aus, z.B. bei Fehlerstrom oder aufgrund einer Störungsrückmeldung, so werden alle Auslösehebel 404, 404' der LS-Schalter nach unten gekippt und die LS-Schalter abgeschaltet. Nach Einrasten des Fi-Auslösehebels 403 können auch wieder die Auslösehebel 404 bzw. 404' eingerastet werden. Um eine Notstromversorgung bei einer derartigen Absicherung entsprechend den Vorschriften hinsichtlich Leistung, Überstrom und Leitungsquerschnitten zu ermöglichen, wenn die Elektronik stromlos ist, wird folgendermassen vorgegangen:

Jeder der LS-Schalter weist im vorliegenden Fall zwei Auslösehebel 404 und 404' auf. Ferner weist, wie Fig. 16a zeigt, jeder der LS-Schalter 401 eine Kurzschlussstromspule 406 und zwei parallel geschaltete Bimetallauslösungen 407, 408 auf. Vom Anschluss 412 fliesst der Strom zur Kurzschlussspule 406 und nach dieser verzweigt sich der Strom über die beiden identen Bimetallauslösungen 407, 408. Beide Bimetallauslösungen wirken auf jeweils eine ihnen zugeordnete Brückeneinrichtung 409 und 410, die im Falle, dass die Bimetallauslösungen durch Überstrom ausgelöst wurden, von diesen verstellt wird und die jeweiligen Auslösehebel 404, 404' ausklinkt. Ein Wiedereinklinken der Auslösehebel 404, 404' wird erst möglich, wenn die Bimetallauslösungen in Ruhestellung sind bzw. kein Überstrom mehr fliesst. Wurden die LS-Schalter nur vom Fehlerstromfluss durch den Fi-Block ausgelöst, so können die Auslösehebel 404, 404' sofort nach Anheben des Auslösehebels 403 bzw. des Bügels 405 in Schliessstellung gekippt werden. Die Auslösekontakte der Brückeneinrichtungen 409, 410 sind mit 409' und 410' bezeichnet und werden von den Bimetallauslösungen (die gemäss Pfeilen öffnen) 407, 408 über die Brückeneinrichtungen 409, 410 betätigt.

Fällt die Elektronik aus, so schalten der Fi-Block und somit alle LS-Schalter ab. Der Fi-Schalter kann wieder eingeschaltet werden, ebenso wie die LS-Schalter. Dies hätte jedoch zur Folge, dass die ganze Leistung an den nicht mehr elektronisch überwachten Stromentnahmestellen zur Verfügung stehen würde. Um dies zu verhindern, ist einer Brückeneinrichtung 410 eine Stelleinrichtung 411 zugeordnet, die im Falle ihrer Stromversorgung von der Elektronik bzw. vom Netzgerät der Elektronik die Brückeneinrichtung 410 nicht beeinflusst. Fällt die Stromversorgung jedoch aus, so belastet sie die Brückeneinrichtung 410 und diese ist nicht mehr einzuklinken bzw. einzurasten bzw. der Auslösehebel 404' verbleibt nicht mehr in seiner Einschaltstellung. Der Auslösehebel 404, der der Brückeneinrichtung 409 zugeordnet ist, kann jedoch eingerastet werden, so dass über die eine Bimetallauslösung 407 die Stromentnahmestellen mit der den Vorschriften entsprechenden halben Leistung versorgbar sind; würde mehr als diese entnommen, so löst die Bimetalleinrichtung 407 aus. Die Kurzschlussabschaltung wird nicht berührt, da nach wie vor der gesamte Strom über die Kurzschlussauslösespule 406 fliesst, die im Kurzschlussfall beide Kontakte 409' und 410' öffnet.

Die Stelleinrichtung 411 kann eine elektromechanische Einrichtung sein, z.B. eine Spule mit Tauchanker, der bei Stromversorgung durch die Elektronik gegen Federwirkung in die Spule gezogen ist und bei Stromausfall gegen die Brückeneinrichtung drückt, so dass diese nicht mehr einrastbar ist. Die Stelleinrichtung könnte auch auf ähnliche Weise wie bei Bimetallauslösungen bekannter Bauart aufgebaut sein und bei Überstromfluss die Klinke beeinflussen bzw. nicht einrastbar machen und ein Einrasten des Auslösehebels verhindern.

Mit 412 sind in Fig. 16a die von den Brückeneinrichtungen bei Überstrom unterbrechbaren Kontakte bezeichnet. Fig. 16b zeigt schematisch den Stromfluss bzw. die Stromaufteilung in einem der LS-Schalter (für die Phase R), der eine Notstromversorgung mit der halben Leistung ermöglicht. Leuchtdioden 414 zeigen an, ob die Stelleinrichtung mit Strom versorgt ist bzw. die Brückeneinrichtung unbelastet ist.

Fig. 17 zeigt eine Wanddose 27 und die in ihr angeordneten, die Flachleitung 30 verlängernden Leiterbahnen 32, die eine Phase, z.B. R, den Nulleiter 0, den Erdleiter E und zwei Steuerleitungen 1, 2 umfassen, wobei die Flachleitung rechts an der Wanddose 27 angeschlossen wird. Es sind drei Abteilungen für Module angedeutet. In der weiteren Abteilung sind die Stromleiter R, 0, zumindest aber die Phase R unterbrochen. Ohne diese Unterbrechung zu überbrücken, können bei voller Funktion in die Wanddose 27 Schalter eingesetzt werden, die nur E, 1 und 2 kontaktieren. Ein Stromauslass würde jedoch nicht mit Strom versorgt. Zur Überbrückung der Kontakte 413 ist ein Modul mit einer oder zwei Leiterbrücken vorgesehen, die jeweils die unterbrochenen Kontakte verbinden. Den Leiterbrücken sind gleichzeitig die Überwachungsschaltungen zugeordnet bzw. sie sind mit einem auf Signale von einer Stromschaltstelle oder von den Überwachungsschaltungen stromschaltenden Element schaltbar bzw. unterbrechbar.

Durch Einstecken des Überbrückungs- bzw. Überwachungsmoduls werden die Wanddose bzw. über Flachleitungen angeschlossene nachfolgende Wanddosen überwacht, gegebenenfalls schaltbar und eine Stromentnahme möglich.

## Patentansprüche

1. Anordnung zur Stromversorgung von Gebäuden, Wohnhäusern, Büros, Wohnungen, Geschäftslokalen, od.dgl., wobei die Stromversorgungsleitungen von einer Überstrom- und Fehlerstromschutzschalter zur Absicherung aufweisenden Anschlussstelle bzw. Zentrale (7) zu einzelnen Stromentnahmesteller (9), z.B. Steckdosen, Licht- bzw. Wandauslässen, od.dgl. geführt sind, die zumindest zum Teil von Stromschaltstellen (10), z.B. Licht- bzw. Beleuchtungskörperschaltern, regel- bzw. schaltbar sind, wobei in den Stromschaltstellen (10) jeweils eine Signalgeberschaltung (11) vorgesehen ist und die regel- bzw. schaltbaren Stromentnahmestellen (9) jeweils eine Signalempfangsschaltung (13) besitzen, wobei zumindest eine, vorzugsweise zwei oder mehrere, die Stromschaltstellen (10) zumindest mit den regel- bzw. schaltbaren Stromentnahmestellen (9) verbindende(n) Steuerleitung(en) (1, 2) für Schwachstromsignale vorgesehen ist (sind), über die kodierte Schaltsignale von den Stromschaltstellen (10) zu den Stromentnahmestellen (9) zur Betätigung von Stromschalteinrichtungen (15), z.B. von Relais, Thyristoren, Triacs, in den Stromentnahmestellen (9) übertragbar sind und wobei die Stromversorgungsleitungen (R, S, T, 0) mit der(n) Steuerleitung(en) (1, 2) in Form einer gegebenenfalls nicht geschlossenen Ringleitung und davon abgehenden Stichleitungen verlegt sind, dadurch gekennzeichnet, dass die Ringleitung und die Stichleitungen von die Stromversorgungsleitungen (R, S, T), einen Nulleiter (0), einen Erdleiter (E) und die Steuerleitungen (1, 2) umfassenden, gegebenenfalls im Querschnitt Trapezform besitzenden, Flachleitungen (30) gebildet sind, dass die einzelnen Abschnitte der Flachleitung (30) über die Strom- und Steuerleitungen fortsetzende Leiter enthaltende Verbindungs- und/oder Abzweigbauteile (5, 8, 35, 36) miteinander verbunden sind, dass die Flachleitung (30) mit an die Flachleitung angepassten Anschlüssen von Wanddosen (27) verbindbar ist, die weitergeführte, vorzugsweise lagenmässig festgelegte, Leiterbahnen (32) für die Strom- und Steuerleitungen besitzen, dass in die Wanddosen (27) einsetzbare bzw. einsteckbare Module vorgesehen sind, die als Stromentnahmestellen (9) mit der Signalempfangsschaltung (13) und/oder als Stromschaltstelle (10) mit der Signalgeberschaltung (11) ausgebildet sind und Kontakteinrichtungen (31, 151, 166) zur Abnahme von Strom- bzw. Steuersignalen aufweisen, die mit den in der Wanddose (27) weitergeführten Leiterbahnen (32) für Strom- oder Steuersignale im Zuge des Einsetzens des Moduls verbindbar sind, dass, insbesondere bei einer Querschnittsverminderung der Stromleiter, in der zu den Stromentnahmestellen (9) in der Wanddose (27) führenden Stichleitung die regel- bzw. schaltbaren Stromentnahmestellen (9) und die Stromentnahmestellen (9') mit freier Stromentnahme jeweils eine elektronische Überstromüberwachungsschaltung (16) besitzen und dass ein an dem jeweiligen Ausgang der Überwachungsschaltung im Falle eines einen vorgegebenen Wert überschreitenden Stromflusses auftretendes Abschaltsignal einer Steuerschaltung (14) der Stromschalteinrichtung (15) und/oder über die Steuerleitung(en) (1, 2) der Flachleitung (30) der Zentrale (7) zur Auslösung der in der Zentrale vorgesehenen Fehler- und/oder Überstromschutzschalter zur Leitungsunterbrechung zuführbar ist.

2. Anordnung nach Anspruch 1, dadurch gekennzeichnet, dass die Steuerleitung(en) (1, 2) in der Flachleitung (30) neben der oder den, vorzugsweise nebeneinanderliegenden, Stromleitung(en) (R, S, T, 0), jedoch unter Ausbildung eines Zwischenraums zu diesem(n) angeordnet ist (sind).

3. Anordnung nach Anspruch 2, dadurch gekennzeichnet, dass im Zwischenraum der Erdleiter (3) angeordnet ist und/oder eine längsverlaufende Nut (33) ausgebildet ist, in der Montageausnehmungen bzw. -löcher (34) und/oder Aussparungen bzw. Schwachstellen für Befestigungselemente, z.B. Setzbolzen, vorgesehen sind.

4. Anordnung nach einem der Ansprüche 1 bis 3, dadurch gekennzeichnet, dass die Flachleitung (30) in bezug auf eine in deren Längsrichtung senkrecht verlaufende Mittelebene asymmetrisch ausgebildet ist, wobei vorzugsweise die Strom- und Steuerleiter asymmetrisch und/oder die Nut (33) auf der Oberseite der Flachleitung (30) asymmetrisch angeordnet sind und/oder die Kabel für die Aussenleiter (R, S, T, 0) grösseren Drahtquerschnitt aufweisen als die Steuerleitungen (1, 2).

5. Anordnung nach einem der Ansprüche 1 bis 4, dadurch gekennzeichnet, dass die Flachleitung (30) in Form von durch Stege verbundenen isolierten Kabeln bzw. Rundleitern ausgebildet ist.

6. Anordnung nach einem der Ansprüche 1 bis 5, dadurch gekennzeichnet, dass in bzw. an der Wand der Wanddosen (27) zum Anschluss für die Flachleitung (30) zumindest eine an den Querschnitt der Flachleitung (30) angepasste Einstecköffnung (29), gegebenenfalls mit Quetschnippel und/oder Lippendichtung, ausgebildet ist, die an die Lage der Stromleitungen (R, S, T, 0) bzw. Steuerleitungen (1, 2) angepasste Kontakteinrichtungen (54) für die in den Flachleitungen (30) enthaltenen Stromleitungen (R, S, T, 0) und Steuerleitungen (1, 2) besitzen.

7. Anordnung nach einem der Ansprüche 1 bis 6, dadurch gekennzeichnet, dass die die Strom- bzw. Steuerleitungen (R, S, T, 0, 1, 2) der Flachleitung (30) in den Wanddosen (27) fortsetzenden Leiterbahnen (32) und/oder die Kontakteinrichtungen (31, 151, 166) der Module miteinander kontaktierbare Anschlussteile, z.B. Stecker, Buchsen, Schneiden, Feder-, Steck-, Rast-, Klemmverbindungen, Messerkontakte, Anschlussfahnen od.dgl., aufweisen.

8. Anordnung nach einem der Ansprüche 1 bis 7, dadurch gekennzeichnet, dass die Leiterbahnen (32) im Bodenbereich der Wanddose (27) verlaufen und gegebenenfalls zu einem zweiten, am anderen Ende der Wanddose (27) gelegenen Anschluss für eine Flachleitung (30) geführt sind.

9. Anordnung nach einem der Ansprüche 1 bis 8, dadurch gekennzeichnet, dass die Verbindungs- und Abzweigbauteile gegebenenfalls mit einem Quetschnippel bzw. einer Dichtungslippe versehene Winkelstücke (35, 36) und Abzweig- bzw. T-Stücke (5, 8) umfassen, die an die Lage der Strom- und Steuerleitungen in der Flachleitung (30) angepasste Kontakteinrichtungen, z.B. Federklemmen, Schraubklemmen, nebeneinander angeordnete Anschluss- bzw. Quetschhülsen od.dgl. für die in der Flachleitung (30) geführten Stromleitungen (R, S, T, 0) und Steuerleitungen (1, 2) aufweisen.

10. Anordnung nach einem der Ansprüche 1 bis 9, dadurch gekennzeichnet, dass die Überstromüberwachungsschaltung (16), z.B. eine dem jeweiligen Stromleiter zugeordnete bzw. diesen umgebende Spule (44) gegebenenfalls mit Ferritkern, dem Stromleiter zur Strommessung parallelgeschaltete hochohmige Widerstände, Strommesswandler od.dgl. aufweist.

11. Anordnung nach einem der Ansprüche 1 bis 10, dadurch gekennzeichnet, dass insbesondere bei einer Querschnittsverminderung der Stromleiter in der zu den Stromentnahmestellen (9) in den Wanddosen (27) führenden Stichleitung den regel- bzw. schaltbaren Stromentnahmestellen (9) und den Stromentnahmestellen (9') mit freier Stromentnahme jeweils eine elektronische Fehlerstromüberwachungsschaltung (17) zugeordnet ist, die z.B. von einer allen Stromleitungen (R, S, T) und dem Nulleiter (0) zugeordneten bzw. diese umgebenden, Spule (43), gegebenenfalls mit einem Ferrit bzw. Ferritspulenkernen, den Stromleitern zur Strommessung parallelgeschalteten, insbesondere hochohmigen Widerständen, Strommesswandlern od.dgl. gebildet ist, wobei der Ausgang der Fehlerstromüberwachungsschaltung (17) mit der Steuerschaltung (14) der jeweiligen Stromschalteinrichtung (15) zu deren Abschaltung und/oder über die Steuerleitung(en) (1, 2) der Flachleitung (30) mit der Zentrale (7) zur Auslösung der Fehler- und/oder Überstromschutzschalter zur Leitungsunterbrechung verbunden ist.

12. Anordnung nach einem der Ansprüche 1 bis 11, dadurch gekennzeichnet, dass dem Fehlerstromschutzschalter (114, 210) und/oder dem (den) Überstromschutzschalter(n) (81, 208) eine Empfangsschaltung für Abschaltsignale der Überwachungsschaltung(en) (16, 17) zugeordnet ist, mit der die Auslösevorrichtung (213) für den Fehlerstromschutzschalter und/oder zumindest eines der Überstromschutzschalter betätigbar ist.

13. Anordnung nach einem der Ansprüche 1 bis 12, dadurch gekennzeichnet, dass die Steuerschaltung (14) der Stromschalteinrichtung (15) eine Sendeschaltung für die Abschaltsignale der Überwachungsschaltungen (16, 17) bzw. diesen entsprechenden Signalen aufweist, mit der diese Signale über die Steuerleitungen (1, 2) an eine in der Zentrale (7) befindliche Empfangsschaltung weiterleitbar sind.

14. Anordnung nach einem der Ansprüche 1 bis 13, dadurch gekennzeichnet, dass zumindest einer der Überwachungsschaltungen (16, 17) in der Stromentnahmestelle (9) und/oder der an diese angeschlossenen Steuerschaltung (14) eine als Störungsrückmeldeschaltung (23) ausgebildete Sendeeinheit zugeordnet ist, mit der über die Steuerleitungen (1, 2) ein Rückmeldesignal bei einer Leitungsunterbrechung durch die Stromschalteinrichtung (15) infolge einer Fehlermeldung zumindest einer der Überwachungsschaltungen (16, 17) an die Zentraleinheit (7) und/oder die entsprechende zugeordnete Stromschaltstelle (10) weiterleitbar ist, und dass in der Zentraleinheit (7) und/oder der Stromschaltstelle (10) und/oder der Stromentnahmestelle (9) selbst eine Anzeigeeinrichtung (24, 122) zur Anzeige der Art der Störung, insbesondere des Ortes der gestörten Stromentnahmestelle (9), vorgesehen ist.

15. Anordnung nach einem der Ansprüche 9 bis 14, dadurch gekennzeichnet, dass den Überwachungsschaltungen (16, 17) eine Zeitüberwachungsschaltung zugeordnet ist, mit der bei Auftreten von eine gewisse vorgegebene Zeitspanne überschreitenden, eine Störung angebenden Signalen einer oder mehrerer der Überwachungsschaltungen der Steuerschaltung (14) und/oder einer Schnell-Auslöseschaltung (83) für die Fehler- und/oder Leitungsschutzschalter in der Zentrale (7) ein Abschaltsignal zuführbar ist.

16. Anordnung nach einem der Ansprüche 1 bis 15, dadurch gekennzeichnet, dass an die Steuerleitungen (1, 2) und/oder die Zentraleinheit (7) anschliessbare Ein- und Ausgabeeinrichtungen (38, 41) vorgesehen sind, die Signalübertragungseinrichtungen, z.B. Sprechstellen, Kommunikationsleitungen anderer Stromversorgungskreise, Telephon usw. enthalten, als in die Wanddosen (27) einsetzbare Module ausgebildet sind und mit den in den Wanddosen (27) verlaufenden, die Steuerleitungen (1, 2) in den Wanddosen (27) fortsetzenden Leiterbahnen (32) in Leitungskontakt bringbare Bauteile, z.B. Anschlussfedern, Stekker, Buchsen, Messerkontakte usw., aufweisen.

17. Anordnung nach einem der Ansprüche 1 bis 16, dadurch gekennzeichnet, dass eine der Steuerleitungen (1, 2) vom Erdleiter (E) gebildet ist.

18. Anordnung nach einem der Ansprüche 1 bis 17, dadurch gekennzeichnet, dass der Empfangsschaltung (89) der Störungsrückmeldeschaltung in der Zentrale (7) für die Fehlermeldungssignale der Überwachungsschaltungen (16, 17) eine Speichereinheit für zumindest eines oder aufeinanderfolgende Fehlermeldungssignale und eine Lichtanzeigevorrichtung zur Anzeige der Art und des Ortes des Fehlers zugeordnet sind, wozu den Rückmeldesignalen ein Rückmeldekode, ein Fehlerkode und ein Adresskode der gestörten Stromentnahmestelle aufgeprägt ist.

19. Anordnung nach einem der Ansprüche 1 bis 18, dadurch gekennzeichnet, dass die Leiterbahnen (32) für die Stromleitung in der Wanddose (27) unterbrochen sind, dass zur Überbrückung der Anschlüsse für die Stromkontakte in die Wanddose (27) einschiebbarer Modul vorgesehen ist, der einem mit den Leiterbahnen (32) verbindbaren, die Unterbrechung überbrückenden Klemm- oder Steckbügel oder eine Leiterbrücke enthält, der oder die Teil insbesondere überwachter Leiter der Überwachungsschaltungen ist.

20. Anordnung nach einem der Ansprüche 1 bis 19, dadurch gekennzeichnet, dass den Überwachungsschaltungen (16, 17) für die Über- und/oder Fehlerstromerfassung eine oder jeweils eine Verzögerungsschaltung zugeordnet ist, mit der das Abschalten des Stromes bei Über- und/oder Fehlerstrom durch die die Stromversorgung unterbrechende Stromschalteinrichtung (15) über die Ansprechzeit der in der Zentrale (7) vorgesehenen Überstrom- und/oder Fehlerstromschutzschalter hinaus verzögerbar ist.

21. Anordnung nach einem der Ansprüche 1 bis 20, dadurch gekennzeichnet, dass, insbesondere bei den Stromentnahmestellen (9') mit freier Stromentnahme, die von der Überstrom- und/oder Fehlerstromüberwachungsschaltung abgegebenen Fehlersignale der Zentrale (7) bzw. einer Abschalteinrichtung für den Fi- und/oder zumindest den betreffenden Leitungsschutzschalter in der Zentrale (7) für den zu der Stromentnahmestelle (9) geführten Aussenleiter (R, S, T) zugeführt sind, und dass der Fehlererkennungs- und/oder Rücksendeschaltung eine Phasenerkennungsschaltung zugeordnet ist, mit der dem Rückmeldesignal ein Hinweis auf den Aussenleiter aufprägbar ist, in dem ein Über- und/oder Fehlerstrom auftritt, und dass in der Zentrale (7) die Abschalteinrichtung eine Phasenzuordnungsschaltung aufweist, mit der entsprechend dem Rückmeldesignal der dem Aussenleiter zugeordnete Fi- und/oder Leitungsschutzschalter abschaltbar ist.

22. Anordnung nach einem der Ansprüche 1 bis 21, dadurch gekennzeichnet, dass in der Zentrale (7) eine Abfrageeinheit mit Sender vorgesehen ist, die periodisch die Überwachungsschaltungen (16, 17) aller Stromentnahmestellen (9, 9'), insbesondere nacheinander, abfragt und bei Feststellung

19

einer Leitungsunterbrechung zu der(n) Überwachungsschaltung(en) (16, 17) durch Ausbleiben eines Rückmeldesignales die zentrale Auslösung bzw. den Überstromschutzschalter des entsprechenden Aussenleiters auslöst, wobei gegebenenfalls den im unterbrochenen Leitungszweig gelegenen Stromentnahmestellen (9, 9') zugeordnete Störkodes auf der Anzeigeeinrichtung der Zentrale (7) angezeigt werden.

23. Anordnung nach einem der Ansprüche 1 bis 22, dadurch gekennzeichnet, dass die Übertragung der Schaltsignale und die der Fehlerrückmeldungen bzw. Abschaltsignale über jeweils eine eigene Steuerleitung erfolgt.

24. Anordnung nach einem der Ansprüche 1 bis 23, dadurch gekennzeichnet, dass die Überwachungsschaltungen (16, 17) und, insbesondere die Steuerschaltung (14) mit Empfangsschaltung und die Stromschalteinrichtung (15), unmittelbar nach der Abzweigung einer Stichleitung, insbesondere mit verringertem Drahtquerschnitt, angeordnet sind und gegebenenfalls in das Abzweig- bzw. T-Stück für die Stichleitung integriert sind.

25. Anordnung nach einem der Ansprüche 1 bis 24, dadurch gekennzeichnet, dass der Stromschalteinrichtung (15) bzw. den Überwachungsschaltungen (16, 17) bzw. dem(n) Fehlerstrombzw. Überstromschutzschalter(n) in der zentrale (7) eine Nullpunktschaltung zugeordnet ist, mit der der Strom einer bzw. der geschalteten Phase im Spannungs- oder Stromnulldurchgang schaltbar ist.

**Claims**

1. A structure for the power supply of buildings, residences, offices, apartments, shops or the like, the power supply lines being passed from a connection or central (7) having overcurrent or fault current circuit breakers to individual power outlets (9) such as sockets, light or wall outlets or the like which are at least partially controllable or switchable by power switching points (10), for instance light or lighting fixture switches, each power switching point (10) being provided with one each signalling circuit (11) and the controllable or switchable power outlets (9) having one each signal receiving circuit (13), at least one, preferably two or more, control line(s) (1, 2) for weak current signals connecting the power switching points (10) at least with the controllable or switchable power outlets (9), the control lines (1, 2) serving for the transmission of coded switch signals from the power switching points (10) to the power outlets (9) for the actuation of power switching means (15), for instance relays, thyristors, triacs, in the power outlets (9) and the power supply lines (R, S, T, 0) being laid together with the control line(s) (1, 2) in the form of an optionally not closed ring circuit and stub lines emanating therefrom, characterized in that the ring circuit and the stub lines are formed of flat lines (30) of optionally trapezoidal cross section and comprising the power supply lines (R, S, T), a zero conductor (0), a ground wire (E) and the control lines (1, 2), that the individual portions of the flat line (30) are connected to one another by connecting and/or branching elements (5, 8, 35, 36) containing conductors extending the power and control lines, that the flat lines (30) are connectable to the terminals of wall boxes (27) adapted to the flat lines and having continuous conductor tracks (32) of preferably determined position for the power and control lines, that modules insertable or pluggable into the wall boxes (27) are provided, the modules being formed as power outlets (9) with the signal receiving circuit (13) and/or as power switching point (10) with the signalling circuit (11) and having contact means (31, 151, 166) for picking up power and control signals connectable in the course of insertion of the module with the conductor tracks (32) for power or control signals continuing in the wall box (32), that, in particular in the case of a reduction of the cross section of the power conductors, the controllable or switchable power outlets (9) and the power outlets (9') with free power supply in the stub line leading to the power outlet (9) in the wall box (27) each have an electronic overcurrent monitoring circuit (16) and that a cut-off signal appearing at the respective outlet of the monitoring circuit in the event of a current flow exceeding a predetermined value is feedable to a control circuit (14) of the power switching means (15) and/or via the control line(s) (1, 2) of the flat line (30) to the central (7) for actuating the fault current and/or overcurrent circuit breakers provided in the central.

2. The structure according to claim 1, characterized in that the control line(s) (1, 2) is (are) disposed in the flat line (30) next to the, preferably, adjacent, power line(s) (R, S, T, 0), but under formation of a space to this (these).

3. The structure according to claim 2, characterized in that the ground wire (3) is disposed in the space and/or a longitudinally extending groove (33) provided with mounting recesses and/or holes (34) and/or recesses or weak points for fastening elements, for instance setting bolts, are located in said space.

4. The structure according to any one of the claims 1 to 3, characterized in that the flat line (30) is formed asymmetrically in relation to a central plane extending vertically in its longitudinal direction, the current and control conductors preferably being arranged asymmetrically and/or the groove (33) being arranged asymmetrically on the upper side of the flat line (30) and/or the cables for the outer conductors (R, S, T, 0) having a larger wire cross section than the control line(s) (1, 2).

5. The structure according to any one of the claims 1 to 4, characterized in that the flat line (30) is formed by insulated cables or round conductors connected by webs.

6. The structure according to any one of the claims 1 to 5, characterized in that in or on the wall of the wall boxes (27), at least one insert opening (29), optionally with pinch nipple and/or lip seal, adapted to the cross section of the flat line (30), having contact means (54) adapted to the position of the power supply lines (R, S, T, 0) or control lines (1, 2) is provided in the power supply lines (R, S, T, 0) and control lines (1, 2) of the flat lines (30).

7. The structure according to any one of the claims 1 to 6, characterized in that the conductor tracks (32) continuing the power or control lines (R, S, T, 0, 1, 2) of the flat line (30) in the wall boxes (27) and/or the contact means (31, 151, 166) of the modules are provided with mutually contactable terminal elements such as plugs, sleeves, edges, spring, plug-in, snap-in, clamping connections, knife contacts, terminal lugs or the like.

8. The structure according to any one of the claims 1 to 7, characterized in that the conductor tracks (32) extend within the bottom area of the wall box (27) and are optionally passed to a second terminal for a flat line (30) disposed on the other end of the wall box (27).

9. The structure according to any one of the claims 1 to 8, wherein the connecting and/or branching elements comprise elbows (35, 36) and branches and tees (5, 8) optionally provided with a pinch nipple or lip seal having contact means adapted to the position of the power and control lines in the flat line (30), for instance spring terminals, terminal screws, connecting and pinch sleeves disposed side by side or the like for the power lines (R, S, T, 0) and control lines (1, 2) running in the flat line (30).

10. The structure according to any one of the claims 1 to 9, characterized in that the overcurrent monitoring circuit (16) is provided with a coil (44) associated with the respective current conductor or enclosing it and optionally provided with ferrite core, high ohmic resistances connected in parallel with the current conductor for current metering, current transducers or the like.

11. The structure according to any one of the claims 1 to 10, characterized in that in particular in the case of a reduction of the cross section of the current conductors in the stub line leading to the power outlets (9) in the wall boxes (27), one each electronic fault current monitoring circuit (17) is associated with the controllable or switchable power outlets (9) and the power outlets (9') with free power supply, the circuit (17) formed, for instance, by a coil (43) associated with all the power lines (R, S, T) and the zero conductor (0) or enclosing them, optionally with a ferrite or ferrite coil core, in particular high ohmic resistances, current transducers or the like connected in parallel with the current conductors for current metering, the outlet of the fault current monitoring circuit (17) being connected with the control circuit (14) of the respective power switching means (15) for cutting it off and/or via the control line(s) (1, 2) of the flat line (30) with the central (7) for actuating the fault current and/or overcurrent circuit breakers for cutting off the lines.

12. The structure according to any one of the claims 1 to 11, characterized in that a receiving circuit for cut-off signals of the monitoring circuits (16, 17) is associated with the fault current circuit breaker (114, 120) and/or the overcurrent circuit breaker(s) (81, 208), by means of which receiving circuit the actuating device (213) for the fault current circuit breaker and or at least one of the overcurrent circuit breakers is actuable.

13. The structure according to any one of the claims 1 to 12, characterized in that the control circuit (14) of the power switching means (15) is provided with a transmitting circuit for the cut-off signals of the monitoring circuits (16, 17) or signals corresponding to these, by means of which circuit the signals are transmittable via the control lines (1, 2) to a receiving circuit located in the central (7).

14. The structure according to any one of the claims 1 to 13, characterized in that a transmitting unit formed as a fault indicator circuit (23) is associated with at least one of the monitoring circuits (16, 17) in the power outlet (9) and/or a control circuit (14) connected thereto, by means of which transmitting unit a return signal is transmittable via the control lines (1, 2) in the event of a line cut-off by the power switching means (15) as a result of a fault signal of at least one of the monitoring circuits (16, 17) to the central unit (7) and/or the associated power switching circuit (10) and that an indicator means (24, 122) for indicating the type of fault, in particular the site of the faulty power outlet (9), is provided in the central unit (7) and/or the power switching point (10) and/or the power outlet (9) itself.

15. The structure according to any one of the claims 9 to 14, characterized in that a time monitoring circuit is associated with the monitoring circuits (16, 17), by means of which time monitoring circuit a cut-off signal is transmittable in the event of time signals exceeding a certain predetermined time limit and indicating a fault to one or a plurality of the monitoring circuits of the control circuit (14) and/or a quick-release circuit (83) for the fault and/or line circuit breakers in the central (7).

16. The structure according to any one of the claims 1 to 15, characterized in that input and output means (38, 41) containing signal transmission means, for instance call stations, communication lines of other current supply circuits, telephone and the like, connectable to the control lines (1, 2) and/or the central unit (7) are provided and formed as modules insertable into the wall boxes (27) and have structural elements such as terminal springs, plugs, sleeves, knife contacts and the like which are suitable for being placed in conductive contact with the conductor tracks (32) extending in the wall boxes (27) and continuing the control lines (1, 2) in the wall boxes (27).

17. The structure according to any one of the claims 1 to 16, characterized in that one of the control lines (1, 2) is formed by the ground wire (E).

18. The structure according to any one of the claims 1 to 17, characterized in that a memory unit for at least one or successive fault signal(s) and a light indicator device for indicating the type and location of the fault is associated with the receiving circuit (89) of the fault signalling circuit in the central (7) for the fault signals of the monitoring circuits (16, 17), the return signals being imprinted with a return signal code, a fault code and an address code of the faulty power outlet.

19. The structure according to any one of the claims 1 to 18, characterized in that the conductor tracks (32) for the power supply line in the wall box (27) are interrupted, that for bridging the connections for the power contacts, a module insertable into the wall box (27) is provided and contains a clamping saddle or plug-in saddle for conductors or a conductor bridge connectable with the conductor tracks (32) and bridging the interruption forming part of in particular monitored conductors of the monitoring circuits.

20. The structure according to any one of the claims 1 to 19, characterized in that a or one each delay circuit is associated with the monitoring circuits (16, 17) for the detection of overcurrent and/or fault current, the delay circuit serving for delaying the cutting off of the power by the power switching means (15) interrupting the power supply in the event of overcurrent or fault current beyond the reaction time of the overcurrent and/or fault current circuit breaker provided in the central (7).

21. The structure according to any one of the claims 1 to 20, characterized in that in particular in the power outlets (9') with free power supply, the fault signals generated by the overcurrent and/or fault current monitoring circuit are fed to the central (7) or to a cut-off means for the Fi and/or at least the respective circuit breaker in the central (7) for the outside conductor (R, S, T) leading to the power outlet (9) and that a phase identification circuit is associated with the fault identication and/or return circuit, the phase identification circuit being suitable for imprinting a reference to the outside conductor in which the overcurrent or fault current occurred on the return signal, and that in the central (7), the cut-off means has a phase association circuit by means of which the Fi- and/or circuit breaker associated with the outside conductor can be switched off corresponding to the return signal.

22. The structure according to any one of the claims 1 to 21, characterized in that the central (7) is provided with an inquiry unit with transmitter which periodically, in particular successively, inquires the monitoring circuits (16, 17) of all power outlets (9, 9') and on determining of a line interruption to the monitoring circuits (16, 17) by the absence of a return signal actuates the central release or the overcurrent circuit breaker of the corresponding outside conductor, fault codes associated with the power outlets (9, 9') located in the interrupted line branch optionally being displayed on the display means of the central (7).

23. The structure according to any one of the claims 1 to 22, characterized in that the transmission of the switch signals and that of the fault return signals and cut-off signals is each effected via a separate control line.

24. The structure according to any one of the claims 1 to 23, characterized in that the monitoring circuits (16, 17) and in particular the control circuit (14) with receiving circuit and the power switching means (15), are arranged immediately after the branching of a stub line, in particular of reduced cross section, and are optionally integrated into the branching piece or tee for the stub line.

25. The structure according to any one of the claims 1 to 24, characterized in that a zero point circuit by means of which the current of the or one of the switched phase(s) is switchable in the voltage or current null is associated with the power switching means (15) or the monitoring circuits (16, 17) of the fault current or overcurrent circuit breaker(s) in the central.

**Revendications**

1. Structure pour l'alimentation des édifices, immeubles d'habitation, bureaux, maisons de commerce, etc. en énergie électrique, les feeders menant d'une prise de courant ou centrale (7) pourvue d'un disjoncteur à maximum et d'un disjoncteur à courant de défaut aux prises de courant individuelles (9), par exemples boîtes de prise, fiches de courant d'éclairage et fiches et prises murales etc., qui sont au moins partiellement contrôlables ou commutables au moyen de postes de couplage (10), p.e. commutateurs d'éclairage ou d'appareils d'éclairage, chaque poste de couplage (10) étant pourvu d'un couplage de poste transmetteur des signaux (11) et chacune des prises (9) contrôlables ou commutables étant pourvue d'un couplage de poste récepteur des signaux (13), au moins une, de préférence deux ou plusieurs ligne(s) pilote(s) (1, 2) pour les signaux de courant bas niveau reliant les postes de couplage (10) au moins aux prises (9) contrôlables ou commutables, les lignes pilotes servant à transmettre des signaux de commutation codés des postes de couplage (10) aux prises de courant (9) pour la commande de moyens commutateurs (15), p.e. relais, thyristors, triacs, dans les prises de courant (9) et les lignes d'alimentation en courant (R, S, T, 0) étant posées ensembles avec la (les) ligne(s) pilote(s) sous forme d'une ligne en boucle, le cas échéant non fermée, dont émanent des câbles de dérivation, caractérisé en ce que la ligne en boucle et les câbles de dérivation sont formés par des lignes plates (30) le cas échéant de section trapézoidale et comprenant les feeders (R, S, T), un conducteur neutre (0), un conducteur de terre (E) et les lignes pilotes (1, 2), que les sections individuelles de la ligne plate (30) sont mutuellement reliées par des éléments de raccord ou de branchement (5, 8, 35, 36) contenant des conducteurs prolongeant les lignes de courant et les lignes pilotes, que la ligne plate (30) est reliable aux raccords de boîtes encastrées (27) adaptées à la ligne plate pourvus de pistes conductives (32) continues et de préférence de position fixe pour les lignes de courant et les lignes pilotes, que des modules insérables ou enfichables dans les boîtes encastrées (27) et sont formés comme prises de courant (9) avec le poste récepteur des signaux (13) et/ou comme poste de couplage (10) avec le poste transmetteur des signaux (11), que les modules sont pourvus de moyens de contact (31, 151, 166) pour la réception de signaux de courant ou de commande reliables aux pistes conductives (32) prolongées dans la boîte encastrée (27) pour les signaux de courant ou les signaux de commande en train de l'insertion du module, que, surtout en cas d'une réduction de la section transversale des conducteurs, les prises (9) contrôlables ou commutables et les prises (9') à prise de courant libre dans le câble de dérivation menant à la prise de courant (9) dans la boîte encastrée sont chacune pourvues d'un couplage moniteur disjoncteur à maximum (16) électronique et qu'un signal interrupteur apparaîssant à la sortie respective du couplage moniteur en cas d'une conduction de courant excédant une valeur prédéterminée est transmettable à un couplage de commande (14) des moyens commutateurs (25) et/ou, par l'intermédiaire de la (des) ligne(s) pilote(s) (1, 2) de la ligne plate (30) de la centrale (7) pour déclencher les disjoncteurs à maximum et/ou disjoncteurs à courant de défaut pourvus dans la centrale.

2. Structure selon la revendication 1, caractérisée en ce que la (les) ligne(s) pilotes (1, 2) est (sont) disposée(s) dans la ligne plate (30) au voisinage du (des) feeder(s) (R, S, T, 0) qui est (sont) de préférence adjacents, mais formant un espace par rapport au(x) feeder(s).

3. Structure selon la revendication 2, caractérisée en ce que le conducteur de terre (E) est disposé dans l'espace et/ou une rainure (33) s'étendant en direction longitudinale est formée dans ledit espace et pourvue de évidements ou trous de montage (34) et/ou évidements ou points faibles pour des éléments de fixage, p.e. boulons de serrage.

4. Structure selon une des revendications 1 à 3, caractérisée en ce que la ligne plate (30) est formée asymétriquement par rapport à un plan médian s'étendant verticalement dans sa direction longitudinale, les conducteurs et lignes pilotes de préférence disposés asymétriquement et/ou la rainure (33) disposée asymétriquement sur la surface supérieure de la ligne plate (30) et/ou les câbles pour les conducteurs extérieurs (R, S, T, 0) ayant une section de fil plus importante que les lignes pilotes (1, 2).

5. Structure selon une des revendications 1 à 4, caractérisée en ce que la ligne plate (30) est formée de câbles ou conducteurs circulaires isolés et reliés par l'intermédiaire d'entretoises.

6. Structure selon une des revendications 1 à 5, caractérisée en ce que dans ou sur le mur des boîtes encastrées (27), au moins un orifice d'enfichage (29), le cas échéant avec nipple cingleur et/ou joint à lèvres, est pourvu pour le raccord de la ligne plate (30), l'orifice étant adapté à la section transversale de la ligne plate (30) et pourvu de moyens de contact (54) adaptés à la position des conducteurs (R, S, T, 0) ou lignes pilotes (1, 2), les moyens de contact (54) servant pour les conducteurs (R, S, T, 0) et lignes pilotes (1, 2) disposés dans les lignes plates (30).

7. Structure selon une des revendications 1 à 6, caractérisée en ce que les pistes conductives (32) continuant les conducteurs ou lignes pilotes (R, S, T, 0, 1, 2) de la ligne plate (30) dans les boîtes encastrées (27) et/ou les moyens de contact (31, 151, 166) des modules sont pourvus d'éléments de raccord mutuellement contactables, p.e. fiches, douilles, lames, raccords à ressort, à fiche, à crantage, à serrage, contacts à couteau, colliers noyés, etc.

8. Structure selon une des revendications 1 à 7, caractérisée en ce que les pistes conductives (32) s'étendent dans la région du fond de la boîte encastrée (27) et mènent le cas échéant à un deuxième raccord pour une ligne plate (30) disposé à l'autre extrémité de la boîte encastrée (27).

9. Structure selon une des revendications 1 à 8, caractérisée en ce que les éléments de raccord et de branchement comportent des raccords angulaires (35, 36) et des raccords de branchement et raccords en T (5, 8) pourvus, le cas échéant, d'un nipple cingleur ou un joint à lèvres, pourvus de moyens de contact adaptés à la position des conducteurs et lignes pilotes dans la ligne plate (30), p.e. bornes à ressorts, bornes à vis, cosses de raccord et cosses pressantes, etc. disposées adjacentes pour les conducteurs (R, S, T, 0) et lignes pilotes (1, 2) s'étendant dans la ligne plate (30).

10. Structure selon une des revendications 1 à 9, caractérisée en ce que le couplage moniteur disjoncteur à maximum (16) est pourvu d'une bobine (44) associée au conducteur respectif ou l'entourant, pourvue, le cas échéant, d'un core de ferrite, résistances à valeurs ohmiques très élevées reliées en parallèle au conducteur pour mesurer le courant, transducteurs, etc.

11. Structure selon une des revendications 1 à 10, caractérisée en ce qu'en particulier en cas d'une réduction de la section transversale des conducteurs dans le câble de branchement menant aux prises de courant (9) dans les boîtes encastrées, un couplage moniteur (17) électronique pour le courant de défaut est associé aux prises de courant (9) contrôlables ou commutables et aux prises de courant (9') à prise de courant libre, le couplage (17) étant formé, p.e., par une bobine (43) associée à tous les feeders (R, S, T) et au conducteur neutre (0) ou les entourant, le cas échéant pourvue d'un ferrite ou de cores de bobine en ferrite, en particulier résistances à valeurs ohmiques très élevées, transducteurs, etc. connectés en parallèle aux conducteurs pour la mesure du courant, la sortie du couplage moniteur (17) pour le courant de défaut étant relié au couplage de commande (14) des moyens commutateurs (15) respectivs, pour couper le circuit et/ou, par l'intermédiaire de la (des) ligne(s) pilote(s) (1, 2) de la ligne plate (30), à la centrale (7) pour déclencher les dis-joncteurs à maximum et/ou les disjoncteurs à courant de défaut pour couper le circuit.

12. Structure selon une des revendications 1 à 11, caractérisée en ce qu'un couplage récepteur pour les signaux de coupage de circuit des couplages moniteurs (16, 17) est associé au disjoncteur à courant de défaut (114, 210) et/ou le disjoncteur à courant maximum (les disjoncteurs à maximum) (81, 208), ledit couplage récepteur servant à l'actionnement du dispositif déclencheur (213) pour le disjoncteur à courant de défaut et/ou au moins un des disjoncteurs à maximum.

13. Structure selon une des revendications 1 à 12, caractérisée en ce que le couplage de commande (14) des moyens commutateurs (15) est pourvu d'un couplage transmetteur pour les signaux de coupage du circuit des couplages moniteurs (16, 17) ou des signaux en correspondants, ledit couplage transmetteur servant pour transmettre lesdits signaux par l'intermédiaire des lignes pilotes (1, 2) à un couplage récepteur dans la centrale (7).

14. Structure selon une des revendications 1 à 13, caractérisée en ce qu'un ensemble transmetteur formé comme couplage indicateur de défaut (23) est associé à au moins un des couplages moniteurs (16, 17) dans la prise de courant (9) et/ou le couplage de commande (14) y relié, l'ensemble transmetteur servant à transmettre un signal de réception par l'intermédiaire des lignes pilotes (1, 2) en cas d'un coupage du circuit par les moyens commutateurs (15) à cause d'un signal d'erreur d'au moins un des couplages moniteurs (16, 17) à la centrale (7) et/ou le poste de couplage (10) correspondant associé, et qu'un moyen indicateur (24, 122) pour indiquer le type du défaut, en particulier l'endroit de la prise de courant (9) troublée, est pourvu dans la centrale (7) et/ou le poste de couplage (10) et/ou la prise de courant (9) elle-même.

15. Structure selon une des revendications 9 à 14, caractérisée en ce qu'un couplage moniteur du temps est associé aux couplages moniteurs (16, 17), ledit moniteur du temps servant à transmettre un signal de coupage du circuit en cas de signaux de défaux excédant un intervalle prédéterminé à un ou plusieurs des couplages moniteurs du couplage de commande (14) et/ou un couplage déclencheur à action rapide (83) pour les disjoncteurs à courant de défaut et/ou disjoncteurs de protection de canalisation dans la centrale (7).

16. Structure selon une des revendications 1 à 15, caractérisée en ce que des moyens d'entrée et moyens de sortie (38, 41) contenant des moyens transmetteurs de signaux, p.e. postes de conversation, lignes de communication d'autres circuits d'alimentation, téléphone, etc. reliables aux lignes pilotes (1, 2) et/ou l'ensemble central (7), sont pourvus et formés comme modules insérables dans les boîtes encastrées (27) et comportent des éléments structurels, p.e. ressorts de raccord, fiches, douilles, contacts à couteaux, etc., aptes à être mis en contact conductif avec les pistes conductives (32) s'étendant dans les boîtes encastrées et prolongeant les lignes pilotes (1, 2) dans les boîtes encastrées (27).

17. Structure selon une des revendications 1 à 16, caractérisée en ce qu'une des lignes pilotes (1, 2) est formée par le conducteur de terre (E).

18. Structure selon une des revendications 1 à 17, caractérisée en ce qu'une unité de mémoire pour au moins un signal de défaut ou une série de signaux de défaut et un dispositif indicateur lumineux pour indiquer le type et l'endroit du défaut sont associés au couplage récepteur (89) du couplage récepteur des signaux de défaut dans la centrale (7) pour les signaux de défaut des couplages moniteurs (16, 17), les signaux en retour étant imprimés par un code de signaux en retour, un code de défaut et un code d'adresse de la prise de courant troublée.

19. Structure selon une des revendications 1 à 18, caractérisée en ce que les pistes conductives (32) pour la ligne d'alimentation du courant dans la boîte encastrée (27) sont interrompues, que, pour ponter les raccords pour les contacts électriques, un module enfichable dans la boîte encastrée (27) est pourvu et comporte un archet de serrage ou archet enfichable ou un pont conducteur reliable aux pistes conductives (32) et pontant l'interruption et appartenant aux conducteurs, en particulier les conducteurs surveillés des couplages moniteurs.

20. Structure selon une des revendications 1 à 19, caractérisée en ce qu'un couplage de retard ou un couplage de retard à chacun d'eux est associé aux couplages moniteurs (16, 17) pour la détection du courant à maximum et/ou du courant de défaut, le couplage de retard servant à retarder le coupage du circuit par les moyens commutateurs (15) en cas de courant à maximum ou courant de défaut pour un intervalle dépassant la période de réponse des disjoncteurs à maximum et/ou à courant de défaut pourvus dans la centrale (7).

21. Structure selon une des revendications 1 à 20, caractérisée en ce que, en particulier dans les prises de courant (9') à prise de courant libre, les signaux de défaut émis par le couplage moniteur pour le courant à maximum ou courant de défaut sont transmis à la centrale (7) ou à un moyen interrupteur pour le commutateur Fi ou au moins le disjoncteur de protection de canalisation respectif dans la centrale (7) pour le conducteur extérieur (R, S, T) menant à la prise de courant (9) et qu'un couplage d'identification de phase est associé au couplage d'identification des défauts et/ou couplage de retour, le couplage d'identification de phase étant apte à imprimer une référence au conducteur extérieur dans lequel se trouve un courant à maximum ou courant de défaut sur le signal de retour, et que dans la centrale (7), le moyen interrupteur est pourvu d'un couplage d'association de phase au moyen duquel le disjoncteur Fi et/ou de protection de canalisation associé au conducteur extérieur est apte à être mis hors de travail selon le signal de retour.

22. Structure selon une des revendications 1 à 21, caractérisée en ce que la centrale (7) est pourvue d'un poste d'interrogation avec transmetteur interrogant périodiquement, en particulier successivement, les couplages moniteurs (16, 17) de toutes les prises de courant (9, 9') et, en cas d'une interruption de conduction aux couplages moniteurs (16, 17) par la manque d'un signal de retour, déclenche le déclencheur central ou le disjoncteur à maximum du conducteur extérieur respectif, des codes de défaut associés aux prises de courant (9, 9') disposées dans la branche de ligne interrompue étant indiqués, le cas échéant, sur le moyen indicateur de la centrale (7).

23. Structure selon une des revendications 1 à 22, caractérisée en ce que la transmission des signaux commutateurs et celle des signaux de défaut de retour et des signaux interrupteurs est en chaque cas effectuée par l'intermédiaire d'une ligne pilote individuelle.

24. Structure selon une des revendications 1 à 23, caractérisée en ce que les couplages moniteurs (16, 17) et en particulier le couplage de commande (14) avec couplage récepteur et les moyens commutateurs (15) sont disposées immédiatement suivant le branchement d'un câble de dérivation, en particulier de section transversale réduite, et sont intégrés, le cas échéant, dans l'élément de branchement ou en T pour le câble de dérivation.

25. Structure selon une des revendications 1 à 24, caractérisée en ce qu'un couplage de point neutre au moyen duquel le courant d'une phase ou de la phase commutée est commutable pendant le passage par zéro de tension ou de courant est associé au moyen commutateur (15) ou les couplages moniteurs (16, 17) ou le (les) disjoncteur(s) à maximum ou à courant de défaut dans la centrale (7).

FIG.1

FIG. 2

FIG.3

FIG.4

EP 0 119 187 B1

FIG.5

EP 0 119 187 B1

201 202 203

209

| 0 1 3 0 2 4 | — 211 |
| | — 212 |
| | — 213 |
| | — 214 |
| | — 215 |
| | — 216 |

LS | LS | LS | LS

2A U | 25A L | 25A L | 25A L

217 | 208 | 208 | 208 | $\Delta J_N = 100mA$ | 210

k-Faktor 2:5

205 206

SL  N  R  S  T  m

207

n

R S T N SL

3 x 220/380V   6mm² Cu

Fig. 6

15

21

14

136

1,2

16

23

1,2

1
2

Fig. 18

27   413

32

R Z E 1 2

Fig. 17

ca 100mm

ø5mm

30

ø5mm

30

ø2

30

R    S    T    N    E    SL    1    2

R
(S,T)    N    E    SL    1    2

1    2

4x4mm² + 3x1·5mm²

2x2·5mm² + 3x1·5mm²

2x 1·5mm²

Fig.7

321

325

ca 70mm

1

2

SL

322

N

R

324

ca 50mm

23

ca 300mm

Fig.8

37

Fig. 9

Fig. 10

⊥ RM +

→ +

→ ⊥

E 2 1

126 → 127 → 128

129

124 → 125

127 ↑

125 ↑

12

Fig. 12

R →
S →
T →
N →
PE →

87

⊥    +
E    1

Fig. 11

122
119

⊥    +

E 2 1

150

150'

111 112

116

117

118

125

121

120

43

Fig. 13

## STECKDOSE

Fig. 14

## SCHALTER

Fig. 15

Fig. 16

Fig. 16a

Fig. 16 b